# EUROPÄISCHE PATENTSCHRIFT

(11) **EP 4 228 967 B1**
(45) Veröffentlichungstag und Bekanntmachung des Hinweises auf die Patenterteilung: **19.08.2026**
(21) Anmeldenummer: 21794355.4
(22) Anmeldetag: 15.10.2021
(51) Int. Cl.: B64F 1/00, B64F 1/12, B64F 3/00, B64F 1/02

(54) **AUTOMATISCHES DROHNEN-POSITIONIERUNGSSYSTEM**
AUTOMATISCHES DROHNEN-POSITIONIERUNGSSYSTEM
SYSTÈME DE POSITIONNEMENT AUTOMATIQUE DE DRONES

(30) Priorität: 16.10.2020 DE 102020006385; 09.04.2021 DE 102021001842
(43) Veröffentlichungstag der Anmeldung: 23.08.2023
(73) Patentinhaber: Guideline Robotics GmbH, 74354 Besigheim (DE)
(72) Erfinder: SCHWARZBACH, Marc, 74354 Ottmarsheim (DE)
(74) Vertreter: Uexküll & Stolberg
(86) Internationale Anmeldenummer: PCT/EP2021/078634
(87) Internationale Veröffentlichungsnummer: WO 2022/079254

(56) Entgegenhaltungen:
- EP-A1- 3 680 181
- WO-A1-2019/232753
- WO-A2-2015/195175
- US-A- 3 139 249
- US-A- 3 392 940
- US-A1- 2014 291 442
- US-A1- 2020 062 421
- KOJI A O SUZUKI ET AL: "Automatic Battery Replacement System for UAVs: Analysis and Design", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, vol. 65, no. 1 - 4, 9 September 2011 (2011-09-09), pages 563 - 586, XP019989902, ISSN: 1573-0409, DOI: 10.1007/S10846-011-9616-Y

## Beschreibung

Die vorliegende Erfindung betrifft allgemein ein System zum automatischen Positionieren einer Drohne auf einem Lande-/Startplatz zwecks Beladen und Entladen einer Drohne, Betanken einer Drohne, Laden des Akkus einer Drohne, Frachttausch, Nutzlastaustausch, etc.

Ferner bezieht sich die vorliegende Erfindung auf ein System zum Transportieren verschiedener Güter von einem Ursprungsort (Versender) zu einem entfernt gelegenen Bestimmungsort (Empfänger) unter Verwendung einer Drohne in Kombination mit mindestens einer stationären Transportanlage und mindestens einem System zum automatischen Positionieren einer Drohne auf einem Lande-/Startplatz.

Unter dem Begriff "Güter" sind Pakete, Päckchen, Behälter, Sendungen, Laborproben, Blutkonserven, Medikamenten-Packungen, Rohrpostbüchsen, Akkumulatoren, funktionale Nutzlasten, etc. zu verstehen, die hinsichtlich Form und Gewicht geeignet sind, um von einer Drohne transportiert werden zu können. Zur Vereinfachung wird nachfolgend der Begriff "Sendung" verwendet.

Die vorliegende Erfindung wird vorzugsweise unter Verwendung von unbemannten Luftfahrzeugen umgesetzt. Unter einem unbemannten Luftfahrzeug (unmanned aerial vehicle = UAV) versteht man ein Luftfahrzeug, das ohne eine an Bord befindliche Besatzung autark durch einen Computer oder vom Boden aus mittels einer Fernsteuerung betrieben und navigiert werden kann, wobei die grobe Bestimmung der Position des UAV mit Hilfe des Globalen Positionierungssystems (GPS), eines Globalen Navigationssatellitensystems (GNSS), Galileo, etc. erfolgen kann. Zusätzlich oder alternativ ist eine Steuerung bzw. Positionsbestimmung auch mit Hilfe einer oder mehrerer an dem UAV vorgesehenen Kameras möglich, oder auch mit anderen bordseitigen und/oder bodenseitigen Sensorik-Einrichtungen, wie zum Beispiel Vision, Radar, Funkbeacons, Lichter, etc., die aber alle nur eine recht ungenaue Positionsbestimmung und somit nur eine recht ungenaue Landung eines UAV auf einem Lande-/Startplatz ermöglichen. Kleinere UAVs werden üblicherweise durch Akku-gespeiste Elektromotoren angetrieben, wohingegen größere UAVs auch durch einen Verbrennungsmotor angetrieben werden können. Die Zuladung bei kleineren UAVs liegt im Bereich bis etwa 10 kg. Größere UAVs sind in der Lage, Sendungen mit einem größeren Gewicht transportieren zu können. In der deutschen Sprache werden unbemannte Luftfahrzeuge auch als Drohnen bezeichnet, weshalb nachfolgend zur Bezeichnung von unbemannten Luftfahrzeugen jeglichen Typs (insbesondere senkrecht start- und landefähige Luftfahrzeuge, Hubschrauber, VTOL, etc.) die Bezeichnung "Drohne" verwendet wird.

Die Nutzung von Drohnen für verschiedene Aufgaben nimmt seit Jahren stetig zu. Dabei spielt vor allem die Tatsache eine Rolle, dass die Kosten für den Betrieb von Drohnen im Vergleich zu bemannten Flugzeugen oder Hubschraubern deutlich geringer sind. Durch eine steigende Automatisierung von Drohnen-Systemen ist deren Nutzung auch durch geringer qualifizierte Personen möglich, wodurch weitere Kosten eingespart werden.

Meist erfolgt die Nutzung von Drohnen allerdings noch nach dem Prinzip "ein Fluggerät - ein Bediener". Dies rührt auch daher, dass insbesondere der Betrieb der Drohnen am Boden, z.B. das Tauschen oder Laden der Akkus, das Betanken, das Entladen bzw. Beladen der Drohne mit einer Sendung (Fracht) sowie das Sichern der Drohne nach Beendigung des Einsatzes, derzeit durch personalintensive Handarbeit erfolgt.

Hierdurch wird jedoch die Nutzung von Drohnen insbesondere an entlegenen Orten limitiert, wo keine Person diese Arbeit übernehmen kann. Ebenso führt der Bedarf an zusätzlichem Personal für diese Handhabungsaufgaben zu erhöhten Kosten pro Flug, was in bestimmten Bereichen den Einsatz von Drohnen unwirtschaftlich macht.

Der Start einer Drohne stellt allgemein keine besonderen technischen Ansprüche, da die Drohne einfach aus ihrer aktuellen Position vom Lande-/ Startplatz abheben kann. Bei der Landung ergibt sich jedoch das Problem, dass die Kombination aus ungenauer Erfassung der Position einer Drohne und Beschränkung der präzisen Steuerbarkeit einer Drohne häufig zu gravierenden Positionsfehlern am Lande-/Startplatz einer Drohne führt. Mit anderen Worten: eine "punktgenaue" Landung der Drohne auf dem Lande-/Startplatz ist letztlich nicht möglich. Zur Lösung dieses Problems wurden bereits verschiedene passive Systeme vorgeschlagen, die beispielsweise mit einer Art von Trichter arbeiten, um eine Drohne auf dem letzten Teilstück ihrer Landung auf einem Lande-/Startplatz physisch zu führen und somit zu positionieren; allerdings sind solche Systeme hinsichtlich ihrer maximalen Größe begrenzt (also eher für kleine Drohnen geeignet) und benötigen ferner eine hohe Grundgenauigkeit bei der Landung der Drohne. Möglich sind auch aktive Systeme, bei denen beispielsweise lineare Aktuatoren genutzt werden können, die die Drohne nach der Landung mit Hilfe mehrerer bewegten Achsen in die gewünschte Position "schieben". Aber auch hier treten Probleme hinsichtlich der exakten Ausrichtung der Drohne auf, was dazu führen kann, dass die Drohne nach ihrer Landung eine falsche Orientierung beispielsweise relativ zu einem Stromladeanschluss oder einer Belade-/Entladestation hat und dann manuell neu ausgerichtet werden muss. Die nötige Fläche bzw. Größe der obigen Systeme ergibt sich aus der möglichen örtlichen Präzision der Landung, die auch vom Wetter, insbesondere vom Wind, abhängig sein kann. Es ist offensichtlich, dass die Kosten überproportional zur Größe des Positionierungssystems steigen, wodurch die bekannten Systeme irgendwann unwirtschaftlich werden.

Bekannte Positionierungssysteme erfordern zumeist umfangreiche mechanische Installationen, Motoren und zugehörige Steuerungen, die relativ störungsanfällig sind. Nachteilig bei bekannten Lösungen ist außerdem, dass sie eine hohe Präzision bei der Landung erfordern, um die nötige Fläche der mechanischen Positionierungssysteme möglichst klein zu halten. Methoden für eine präzise Positionierung (z.B. RTK, GPS, Funkortung (Deckfinder), bildverarbeitende Verfahren) sind außerdem teuer und teilweise recht unzuverlässig.

Weiterhin sind insbesondere aus dem Bereich der Forschung Systeme bekannt, bei denen mobile Plattformen (z.B. auf dem Dach eines Autos) oder robotische Systeme zur Landung (Einfangen) von Drohnen eingesetzt werden. Diese Systeme erfordern jedoch eine sehr komplexe Steuerung/Regelung und sind nicht als ausreichend robust für den flächendeckenden Einsatz anzusehen.

Die EP 3 680 181 A1 betrifft Systeme und Verfahren für den Punktstart und die Punktlandung (PTOL) unbemannter Flugobjekte auf einer begrenzten Landefläche, die einem Landekörper zugeordnet ist.

Die US 3,139,249 A beschreibt eine Energie-Absorber-Einheit, die ausgestaltet ist, um die von einem abbremsenden Objekt (zum Beispiel ein Flugzeug) entwickelte Energie an einen fluidartigen Energieabsorber weiterzugeben, um das Fluid darin in einem schnellen Strömungsmuster zu übertragen, um dadurch durch eine konstante Umkehrung der Fluidströmung gegen sich selbst zu arbeiten, um Energie zu absorbieren. Ferner wird eine Einheit beschrieben, die einen Energieabsorber mit einem Auffangseil zum Auffangen von Flugzeugen und eine einfache Rückgewinnungseinheit zur Rückführung des Absorbers nach jedem Auffangvorgang beschrieben.

Die US 2020/062421 A1 betrifft ein Verfahren zum Landen eines gefesselten Flugzeugs, umfassend die Schritte: Anflug eines Bodenstandorts mit dem Flugzeug, wodurch die freie Länge des Halteseils zwischen dem Flugzeug und dem Bodenstandort auf die freie Länge verkürzt wird das Halteseil einen vorbestimmten Wert erreicht, weitere Annäherung an den Bodenstandort mit dem Flugzeug, wodurch die freie Länge des Halteseils auf dem vorbestimmten Wert gehalten wird, Halten des Halteseils, um eine Schleife zu bilden, wobei die Schleife durch das sich bewegende Flugzeug gespannt und festgezogen wird, und Dämpfen der Verengung der Schleife, um das Flugzeug abzubremsen, bis es am Boden steht. Ferner beschrieben ist ein Start- und Landesystem für ein gefesseltes Luftfahrzeug, umfassend eine Landebahn für das Luftfahrzeug, eine Winde für die Leine und ein Rückhaltesystem zur Bildung einer Schlaufe die Halteleine zwischen der Winde und dem Flugzeug, das sich der Landebahn nähert, wobei das Rückhaltesystem eine Dämpfungsvorrichtung zum Dämpfen einer durch die Bewegung des Flugzeugs beim Anflug und bei der Landung verursachten Straffung der Schlaufe aufweist, um das Flugzeug abzubremsen.

Koji A.O. Suzuki et al.: "Automatic Battery Replacement System for UAVs: Analysis and Design", JOURNAL OF INTELLIGENT AND ROBOTIC SYSTEMS; THEORY AND APPLICATIONS - (INCORPORATING MECHATRONIC SYSTEMS ENGINEERING), KLUWER ACADEMIC PUBLISHERS, DO, Bd. 65, Nr. 1-4, 9. September 2011, Seiten 563-586, XP019989902, ISSN: 1573-0409, DOI: 10.1007/S10846-011-9616-Y, bezieht sich auf künftige unbemannte Luftfahrtsysteme (UAS), die voraussichtlich nahezu autonom sein werden und aus heterogenen unbemannten Luftfahrzeugen (UAVs) bestehen. Vorgeschlagen wird ein Modell zur Bewertung der Abdeckung eines bestimmten UAS. Außerdem werden verschiedene Lösungen für verschiedene Module eines automatischen Batteriewechselsystems für UAVs beschrieben. Darüber hinaus wird eine Bodenstation vorgeschlagen, die in der Lage ist, die Batterien eines UAV auszutauschen.

Die US 2014/291442 A1 betrifft eine Luftfahrzeug-Harpunenvorrichtung zur Befestigung eines Luftfahrzeugs an einem Gitter eines Landeplatzes, wobei das Luftfahrzeug ein Untergestell mit einer Auflagefläche umfasst, um das Luftfahrzeug bei Bodenkontakt zu halten. Die Harpunenvorrichtung umfasst weiterhin ein an der Auflagefläche angeordnetes Sicherungselement sowie eine elastische Betätigungseinrichtung, die dazu geeignet ist, das Sicherungselement in einem unbelasteten Zustand über die Auflagefläche hinaus auszufahren, und die in einem belasteten Zustand durch die Gewichtskraft des Fluggeräts zusammengedrückt wird, und zwar bei Kontakt mit dem Boden, so dass das Sicherungselement einfährt und die Auflagefläche mit dem Boden in Kontakt kommt.

Die US 3,392,940 A bezieht sich auf eine Vorrichtung zur automatischen Verankerung oder Sicherung einer Drohne oder eines anderen Hubschraubers auf der Fläche, auf der sie landet. Die verbesserte Verankerungsvorrichtung umfasst eine Trommelbaugruppe, ein erstes Kabelsystem, das sich von einem ersten Festpunkt auf der Trommelbaugruppe entlang einer Kante der Landefläche zurück zu einem zweiten Festpunkt auf der Trommelbaugruppe erstreckt, ein zweites Kabelsystem, das sich von einem dritten Festpunkt auf der Trommelbaugruppe entlang der gegenüberliegenden Kante der Landefläche zurück zu einem vierten Festpunkt auf der Trommelbaugruppe erstreckt, und eine Einrichtung zur Steuerung der Drehung der Trommelbaugruppe und eine Einrichtung, um Abschnitte der Kabel entlang gegenüberliegender Seiten der Landefläche parallel zu halten, bis ein vorbestimmter Betrag an Spannung auf die Kabel ausgeübt wird.

Die WO 2015/195175 A2 offenbart ein System zur Erleichterung der automatisierten Landung und des Starts eines autonomen oder vom Piloten gesteuerten schwebenden Luftfahrzeugs mit einem kooperativen Unterboden an einem stationären oder mobilen Landeplatz und einem automatisierten Lagersystem, das in Verbindung mit dem Lande- und Startmechanismus verwendet wird und eine Vielzahl von UAVs lagert und bedient wird beschrieben. Das System zeichnet sich vor allem dadurch aus, dass der Landemechanismus mit 6 Achsen in Roll, Nick, Gier sowie x, y und z einstellbar ist und sich auf das Luftfahrzeug im Flug ausrichtet, es abfängt und das Fahrzeug im Hinblick auf die Trägheitsgrenzen des Fahrzeugs abbremst. Das Luftfahrzeug und der Fangmechanismus sind mit einem Sender und Empfänger ausgestattet, um die Fahrzeugpriorität sowie den Abstand und die Winkel zwischen Landemechanismus und Luftfahrzeug zu koordinieren. Das Lande- und Startsystem verfügt über Mittel zur Echtzeitverfolgung der Position und Ausrichtung des UAV. Der Landemechanismus wird im Wesentlichen auf die Basis des Luftfahrzeugs ausgerichtet sein.

Die WO 2019/232753 A1 bezieht sich auf eine Basisstation für ein unbemanntes Luftfahrzeug, umfassend eine Basis, eine Positionierungsbaugruppe und eine Antriebseinheit, wobei die Basis mit einem Landebereich ausgestattet ist und das unbemannte Luftfahrzeug im Landebereich landen kann. Die Positionierungsbaugruppe umfasst mindestens zwei Positionierungselemente, und die mindestens zwei Positionierungselemente umfassen ein erstes Positionierungselement und ein zweites Positionierungselement. Das erste Positionierungselement und das zweite Positionierungselement sind beweglich im Landebereich vorgesehen, und die Antriebseinheit wird zum Antreiben von mindestens einem der ersten und zweiten Positionierungselemente verwendet. Wenn die Antriebseinheit mindestens eines der ersten und zweiten Positionierungselemente antreibt, bewegen sich die mindestens zwei Positionierungselemente im Landebereich relativ zueinander, so dass die mindestens zwei Positionierungselemente in der Lage sind, das unbemannte Luftfahrzeug auf einen zu begrenzen voreingestellte Position des Landeplatzes und damit die Positionierung des unbemannten Luftfahrzeugs.

Es ist daher eine Aufgabe der vorliegenden Erfindung, die aus dem Stand der Technik bekannten Lösungen zum Positionieren von Drohnen auf einem Lande-/Startplatz derart weiterzuentwickeln, dass die Nachteile des Standes der Technik überwunden werden. Es ist insbesondere eine Aufgabe der vorliegenden Erfindung, Lösungen zur Verfügung zu stellen, die zum Ziel haben, das Landen von Drohnen auf einem Lande-/Startplatz sowie das präzise Positionieren und Ausrichten von Drohnen auf dem Lande-/Startplatz zu automatisieren. Eine weitere Aufgabe der vorliegenden Erfindung besteht darin, ein System zum automatischen Positionieren und Ausrichten einer Drohne auf einem Lande-/Startplatz zur Verfügung zu stellen, mit Hilfe dessen das Beladen/Entladen einer Drohne, das Betanken einer Drohne bzw. das Laden des Akkus einer Drohne wesentlich verkürzt wird, das konstruktiv einfach aufgebaut ist, preiswert implementiert werden kann und unempfindlich gegenüber Störungen ist.

Die obigen Aufgaben werden durch ein System zum automatischen Positionieren einer Drohne auf einem Lande-Startplatz mit den Merkmalen von Anspruch 1 gelöst. Eine alternative Lösung zur Lösung derselben Aufgaben ist in Anspruch 14 definiert. In den nebengeordneten und abhängigen Ansprüchen sind vorteilhafte und bevorzugte Alternativen und Weiterbildungen angegeben.

Erfindungsgemäß wird ein System zum automatischen Positionieren einer Drohne vorgeschlagen, mit Hilfe dessen die Drohne, nachdem sie irgendwo innerhalb einer bestimmten Landefläche auf einem Lande-/Startplatz gelandet ist, automatisch und präzise zu einer vorbestimmten Position befördert und dabei auch automatisch korrekt ausgerichtet wird. Vorzugsweise wird die Drohne nach dem Landen auf der Landefläche des Lande-/Startplatzes durch das erfindungsgemäße Positionierungssystem relativ zu beispielsweise der Belade-/Entladestation einer Transportanlage oder einer Einrichtung zum Betanken der Drohne bzw. zum Aufladen oder Austauschen der Akkus der Drohne automatisch und präzise positioniert sowie exakt ausgerichtet. Wenn sich die Drohne schließlich in korrekter Ausrichtung in der gewünschten vorbestimmten Position befindet, kann sie auf einfache Weise und ohne Einsatz von Personal mit anderen Einrichtungen gekoppelt werden, wie zum Beispiel mit einer Belade-/Entladestation, Einrichtungen zum Betanken der Drohne, Einrichtungen zum Aufladen der Akkus der Drohne, Einrichtungen zum Austauschen des Akkus, etc.

Ein Aspekt der vorliegenden Erfindung betrifft das automatische Beladen bzw. Entladen einer Drohne an einem Lande-/Startplatz, an dem vorzugsweise eine oder mehrere Belade-/Entladestationen einer Transportanlage vorgesehen sind. Die Belade-/Entladestationen sind mit der Transportanlage verbunden und ferner ausgestaltet, um funktional mit einer Drohne gekoppelt werden zu können, wenn diese an der vorbestimmten Position benachbart zur Belade-/Entladestation positioniert ist. Hierdurch kann ermöglicht werden, eine Sendung von der an der Belade-/Entladestation automatisch und präzise positionierten und ausgerichteten Drohne über die Belade-/Entladestation an die Transportanlage zu übergeben (Entladen) bzw. eine Sendung von der Transportanlage über die Belade-/Entladestation an die Drohne zu übergeben (Beladen).

Eine bevorzugte Transportanlage kann beispielsweise ein allgemein bekanntes Rohrpostsystem bzw. eine Rohrpostanlage umfassen, bei der Transportbehälter (Rohrpostbüchsen) mit Hilfe von Luftdruck durch Rohre des Rohrpostsystems befördert werden. Es können aber auch andere Transportanlagen verwendet werden, wie zum Beispiel Schienensysteme, Bandförderanlagen, Rollenförderanlagen etc.

Mit Hilfe der vorliegenden Erfindung kann somit die logistische Anbindung einer Drohne an eine oder mehrere Transportanlagen verbessert werden. Durch das erfindungsgemäße Positionierungssystem wird ermöglicht, dass eine Sendung von einem Versender am Ursprungsort über eine erste Transportanlage zu einer ersten Belade-/Entladestation transportiert werden kann, wo die Sendung automatisch in eine Drohne geladen wird, die durch das Positionierungssystem präzise und in korrekter Ausrichtung mit jener Belade-/Entladestation gekoppelt ist. Anschließend wird die Drohne von der Belade-/Entladestation abgekoppelt, und die Sendung wird dann mit der Drohne zum Bestimmungsort befördert, wo die Drohne auf einem zugehörigen Lande-/Startplatz landet und dort vorzugsweise mit Hilfe eines weiteren Positionierungssystems automatisch und präzise mit einer zugehörigen Belade-/Entladestation gekoppelt wird. Hier kann die Drohne automatisch entladen und die Sendung dann über eine zweite Transportanlage zum Empfänger transportiert werden.

Der Bestimmungsort kann beispielsweise eine Paket-Packstation sein, wobei die Sendung mit Hilfe einer Drohne beim Versender abgeholt und an einer mit einem Positionierungssystem und einer Entladestation versehenen Paket-Packstation entladen wird. Das Positionierungssystem und die Entladestation können beispielsweise auf dem Dach der Paket-Packstation vorgesehen sein. Die Packstation kann mit einer internen Transportanlage versehen sein, um die Sendungen in die entsprechenden Postfächer (Empfänger) zu transportieren.

Vorzugsweise können Drohnen zur Verbindung mehrerer stationärer Rohrpostsysteme oder ähnlicher Transportsysteme genutzt werden. Mit Hilfe dieser Transportsysteme (und der angeschlossenen Belade-/Entladestationen) in Verbindung mit den erfindungsgemäßen Positionierungssystemen wird eine erhebliche Vereinfachung der Nutzung von Drohnen für Transportaufgaben erreicht, da der Transport einer Sendung vom Versender zum Empfänger im Wesentlichen vollautomatisch erfolgt. Ein wesentlicher Vorteil der vorliegenden Erfindung besteht somit darin, dass bestehende stationäre Rohrpostsysteme (z.B. Rohrpostsystem von mehreren Standorten einer Klinik und eines Labors) durch das vorgeschlagene Konzept mit Hilfe von Drohnen verbunden werden können, wobei die Drohnen mit Hilfe des erfindungsgemäßen Positionierungssysteme auf einfache Weise automatisch und präzise mit den Belade-/Entladestationen der Rohrpostsysteme gekoppelt werden können, um so die Drohnen automatisch beladen und entladen zu können.

Das erfindungsgemäße Positionierungssystem kann ferner verwendet werden, um eine Drohne zwecks Austausch oder Laden der Akkus der Drohne, Betanken der Drohne, Wechseln einer Sendung von einer Drohne zu einer anderen Drohne, etc. automatisch und präzise mit einer entsprechenden Einrichtung zu koppeln, wie zum Beispiel die Belade-/Entladestation einer Transportanlage, eine Einrichtung zum Betanken der Drohne oder zum Aufladen des Akkus der Drohne, etc., die an einem Lande-/Startplatz vorgesehen sind. Wie vorstehend beschrieben, landet die Drohne hierzu auf einer Landefläche eines Lande-/Startplatzes und wird mit Hilfe des erfindungsgemäßen Positionierungssystems "eingefangen" und mit gewünschter Ausrichtung in eine vorbestimmte Position relativ zu der entsprechenden Einrichtung bewegt bzw. geschoben. Neben der präzisen Position ist auch die korrekte Ausrichtung der Drohne von Bedeutung, damit beispielsweise ein Belade-/Entlademittel der Belade-/Entladestation direkt mit beispielsweise der Ladeluke der Drohne gekoppelt werden kann, oder ein Ladestecker bzw. ein Kraftstoff-Einfüllstutzen direkt mit dem zugehörigen Ladeanschluss bzw. mit der Tanköffnung der Drohne verbunden werden kann.

Die bevorzugten Ausführungen des erfindungsgemäßen Positionierungssystems arbeiten mit einer oder mehreren Seilschlingen als Fangmechanismus. Landet nun eine Drohne auf der Ladefläche des Lande-/Startplatzes innerhalb einer Seilschlinge, und wird diese Seilschlinge zugezogen, dann wird die Drohne automatisch und präzise zu einer vorbestimmten Position an bzw. benachbart zu einer Belade-/Entladestation bzw. einer der vorstehend beschriebenen Einrichtungen gezogen und dabei korrekt ausgerichtet. Vorzugsweise wird für den eigentlichen Einholvorgang der Seilschlinge nur ein einziger Aktuator (z.B. eine Seilwinde) benötigt. Die Orientierung der Drohne am Boden (d.h. auf der Lande fläche des Lande-/Startplatz) direkt nach dem Landen der Drohne ist bei den bevorzugten Ausführungen beliebig, wodurch vereinfachte, effiziente Landeverfahren, z.B. ausgerichtet nach dem Wind, eingesetzt werden können. Die korrekte Ausrichtung der Drohne auf der Landefläche erfolgt mit Hilfe des erfindungsgemäßen Positionierungssystems. Um das Positionierungssystem nach dem Starten der Drohne wieder in seine Ausgangsposition zu bringen, wird ein Rückführungssystem genutzt, das verschieden vom eigentlichen Positionierungssystem ausgeführt sein kann. Zum Implementieren des Rückführungssystems können beispielsweise zusätzliche Seilwinden oder andere mechanische Systeme verwendet werden.

Die Funktion der Bewegung und automatischen Positionierung der Drohne wird durch verschieden ausgeführte Drohnen-Standfüße ermöglicht. Dabei werden zwei Typen von Standfüßen eingesetzt, nämlich "seildurchlassend" und "seilfangend", wie nachfolgend ausführlich beschrieben wird.

Weiterhin können Systeme mit mehreren oder anders bewegten Seilen oder Seilschlingen oder auch mit verfahrbaren Fang-Stangen genutzt werden, wenn die Geometrie oder der Aufbau dies erfordern.

Ist eine hinreichen glatte und ebene Landefläche (z.B. ein Hubschrauber-Landeplatz) vorhanden, kann die Installation des erfindungsgemäßen Systems sehr schnell und auf einfache Weise erfolgen, da nur wenige Komponenten installiert werden müssen. Somit wird ermöglicht, das erfindungsgemäße System auch mobil und temporär einzusetzen, was bei den bisherigen Lösungen kaum möglich war. Eine glatte Landefläche kann auch durch Auslegen von Platten oder Folien erreicht werden.

Auch ist durch die geringere Anzahl von Komponenten und deren einfacher Aufbau eine höhere Robustheit gegenüber Umwelteinflüssen gegeben. Daher ist kein aufwändiger Schutz gegen Umwelteinflüsse erforderlich.

Die vorliegende Erfindung und die verschiedenen Aspekte der Erfindung werden nun anhand von Ausführungsbeispielen unter Bezugnahme auf die Figuren beschrieben, auf Basis derer beispielhafte Ausgestaltungen des erfindungsgemäßen Systems zum automatischen Positionieren einer Drohne auf einem Lande-/Startplatz, eines Rückführungssystems und weitere Aspekte der Erfindung erläutert werden. Die vorliegende Erfindung ist jedoch nicht auf diese Ausführungen beschränkt. Beispielsweise können die verschiedenen Aspekte der Erfindung auch mit anderen Typen von Einrichtungen implementiert werden, die auf irgendeine Weise mit einer auf einem Lande-/Startplatz gelandeten Drohne in Beziehung gebracht werden sollen.

Es zeigen:
Figuren 1a-1d schematische Darstellungen der allgemeinen Funktionsweise des erfindungsgemäßen Systems zum Positionieren einer auf einem Lande-/ Startplatz gelandeten Drohne;
Figuren 2a-2c schematische Darstellungen einer alternativen Funktionsweise des erfindungsgemäßen Systems zum Positionieren einer auf einem Lande-/Startplatz gelandeten Drohne;
Figuren 3a und 3b schematische Darstellungen beispielhafter gleitender Standfüße einer Drohne, wobei Figur 3a eine "seilgreifende" Variante und Figur 3b eine "seildurchlassende" Variante zeigt;
Figuren 3c und 3d schematische Darstellungen beispielhafter rollender Standfüße einer Drohne, wobei Figur 3c die "seilgreifende" Variante und Figur 3d die "seildurchlassende" Variante zeigt;
Figur 3e eine schematische Darstellung von einem beispielhaften rollenden Standfuß einer Drohne;
Figur 4 eine schematische Darstellung einer alternativen Ausführung eines mit einer Rolle versehenen Standfußes;
Figuren 5a-5d bevorzugte Ausgestaltungen eines Seilschlingensystems des Positionierungssystems der vorliegenden Erfindung mit "Rückhol-Funktion";
Figuren 6a-6c weitere bevorzugte Ausgestaltungen des Positionierungssystems der vorliegenden Erfindung;
Figuren 7a-7c weitere alternative Ausgestaltungen des Positionierungssystems der vorliegenden Erfindung;
Figuren 8a und 8b schematische Darstellungen weiterer Aspekte zum Positionieren und Ausrichten einer Drohne nahe der endgültigen vorbestimmten Position der Drohne;
Figuren 9a und 9b schematische Darstellungen weiterer Aspekte zum Einholen und Auslegen einer Seilschlinge des Positionierungssystems;
Figur 9c schematische Darstellungen weiterer Aspekte zur Nutzung der Winden zur Bewegung der Drohne zur Startposition;
Figuren 10a und 10b schematische Darstellungen einer Vorrichtung zum "Parken" von einer oder mehreren Drohnen;
Figur 11 eine beispielhafte Implementierung des Positionierungssystems auf dem Dach einer Paket-Packstation;
Figuren 12a und 12b beispielhafte Vorrichtungen zum Schützen einer Drohne an der endgültigen vorbestimmten Position der Drohne bzw. des gesamten Systems; und
Figur 13 eine schematische Darstellung eines Transportsystems, bei dem das erfindungsgemäße Positionierungssystem zum Einsatz kommt.

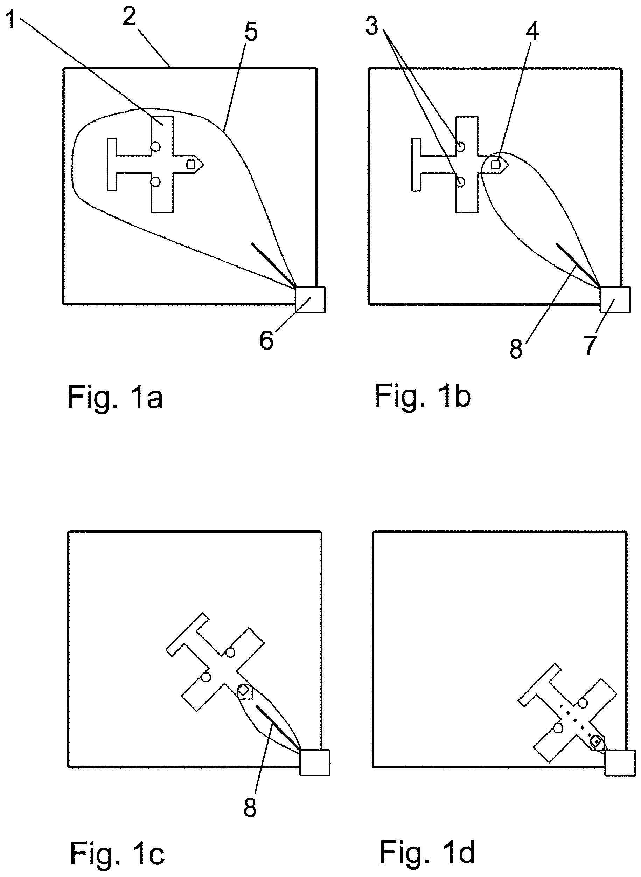

Wie in Figuren 1a-1d gezeigt, ist eine Drohne 1 auf dem Lande-/Startplatz 2 gelandet. Der Lande-/Startplatz bzw. die Landefläche für die Drohne kann theoretisch eine beliebige Größe und Form haben, wobei die Größe allerdings von der Größe der verwendeten Drohnen und von äußeren Einflüssen abhängig ist. So muss die Landefläche bei allgemein eher ungünstigen Wetterverhältnissen größer sein, da beispielsweise bei starkem Wind keine genaue Ladung der Drohne möglich ist. Hat eine Drohne beispielsweise einen Durchmesser von 100 cm, so sollte die Landefläche eine Größe von mindestens 10 m², vorzugsweise 50 m² und noch bevorzugter 100 m² haben. Kommt eine größere Drohne zum Einsatz, so sollte die Landefläche entsprechend größer sein. Die Landefläche kann grundsätzlich jede beliebige Form haben, hat aber vorzugweise eine im Wesentlichen rechteckige, mehreckige oder im Wesentlichen runde Form.

In einer beispielhaften Ausführung hat die Drohne 1 drei Standfüße 3 und 4. Abhängig von Größe und Typ der Drohne kann eine andere Anzahl oder ein anderer Typ von Standfüßen verwendet werden.

Wie in Figur 1a gezeigt, ist auf dem Lande-/Startplatz 2 eine Seilschlinge 5 ausgelegt. In der Ausgangslage (nicht gezeigt) erstreckt sich die Seilschlinge im Wesentlichen entlang der äußeren Grenzen der Landefläche des Lande-/Startplatzes 2 und umschließt vorzugsweise im Wesentlichen die gesamte Landefläche des Lande-/Startplatzes. Folglich wird die Landefläche durch die Seilschlinge 5 definiert, die durch Einrichtungen ausgelegt wird, die nachfolgend beschrieben werden. Die Größe der Landefläche kann also variiert werden, abhängig von der Größe der Drohne und äußeren Bedingungen (z.B. Wind). Wenn folglich die Drohne 1 auf der Landefläche des Lande-/Startplatz 2 landet, befinden sich alle Standfüße der Drohne auf der von der Seilschlinge umschlossenen Landefläche.

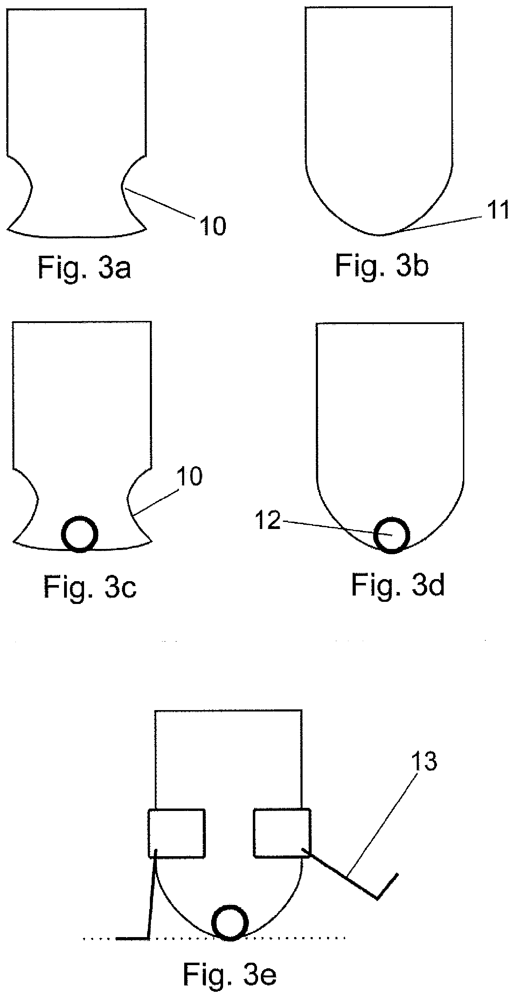

Wie in Figuren 1a und 1b gezeigt, wird die Seilschlinge 5, deren eines Ende oder beide Enden mit einer Seilwinde 6 verbunden sind und von dieser eingezogen werden können, langsam zugezogen (in Figur 1a ist die Seilschlinge 5 bereits leicht eingezogen). Die Seilwinde 6 befindet sich vorzugsweise im Wesentlichen an der äußeren Grenze der Landefläche. Die Seilschlinge 5 und die Seilwinde 6 bilden zusammen eine Art Fangmechanismus. Die beiden hinteren Standfüße bzw. Fahrwerke 3 der Drohne 1 sind vorzugsweise so ausgebildet, dass die Seilschlinge 5 beim Zusammenziehen unter diesen beiden Standfüßen (siehe Figuren 3b und 3d) durchrutscht. Der vordere Standfuß 4 (siehe Figuren 3a und 3c) der Drohne ist hingegen ausgebildet, um die Seilschlinge 5 einzufangen. Die Seilschlinge kommt also mit dem vorderen Standfuß 4 in Eingriff, so dass die Drohne beim weiteren Zusammenziehen der Seilschlinge leicht geschwenkt und in Richtung auf die Seilwinde 6 gezogen wird. Dieser Vorgang ist in Figuren 1c und 1d dargestellt.

Wie in Figur 1b weiter gezeigt, steht die Seilwinde 6 beispielsweise mit der Belade-/Entladestation 7 einer Transportanlage (nicht näher dargestellt) in Verbindung. Die Seilwinde ist vorzugweise mit der Belade-/Entladestation integriert. Die Seilwinde 6 ist vorzugsweise mit einem Führungsmittel 8 versehen, das ausgestaltet ist, um die Drohne 1 noch präziser positionieren und ausrichten zu können, wenn sich die Drohne der Seilwinde nähert, indem das Führungsmittel 8 mit entsprechenden Einrichtungen eingreift, die an der Drohne vorgesehen sind. Beispielsweise kann das Führungsmittel 8 eine Stange sein, die mit einer Führungsbahn oder einem Führungsrohr in oder an der Drohne eingreift. Alternativ oder zusätzlich kann das Führungsmittel auch Führungsbahnen oder Führungskanäle aufweisen sein, die auf der Landefläche vorgesehen und ausgestaltet sind, um beispielsweise mit dem vorderen Standfuß der Drohne eingreifen zu können, wie nachfolgend detaillierter erläutert wird. Wie in Figur 1d gezeigt, befindet sich die Drohne in der korrekten vorbestimmten Position und Ausrichtung zur Seilwinde 6 und zur Belade-/Entladestation 7, um nun die Drohne mit einer über die Transportanlage zugeführten Sendung beladen bzw. um die Drohne entladen zu können, wobei die Sendung mittels einer zugehörigen Einrichtung aus der Drohne entnommen und über die Transportanlage weiter zum Bestimmungsort transportiert wird. Das Führungsmittel 8 kann auch durch ein Rohr realisiert sein, das ausgestaltet und bemessen ist, um beispielsweise eine Rohrpostbüchse in die Drohne zu laden bzw. zu entladen. Alternativ kann die Seilwinde 6 auch mit einer Betankungsanlage in Verbindung stehen, wobei das Führungsmittel 8 in diesem Fall gleichzeitig als ein Kraftstoff-Einfüllrohr dienen kann. Bei einer weiteren Alternative kann die Seilwinde 6 mit einer Akku-Ladestation versehen sein, wobei in diesem Fall an dem Führungsmittel 8 ein Ladestromstecker vorgesehen sein kann.

Wie vorstehend erläutert und in Figuren 1c und 1d gezeigt, wird die Drohne mit Hilfe der sich zuziehenden Seilschlinge 5, die mit dem vorderen Standfuß 4 der Drohne in Eingriff steht, um etwa 45° geschwenkt und in annähernd korrekte Ausrichtung zur Belade-/Entladestation 7 gezogen. Bei einer weiteren Annäherung der Drohne an die Seilwinde 6 kann die Ausrichtung der Drohne relativ zur Belade-/ Entladestation 7 weiter korrigiert werden, indem das Führungsmittel 8 zunehmend mit den zugehörigen Führungseinrichtungen der Drohne in Eingriff kommt.

Nachdem die Drohne über die Belade-/Entladestation 7 mit einer Sendung beladen bzw. entladen, betankt oder die Akkus der Drohne aufgeladen bzw. ausgewechselt sind, kann das Führungsmittel 8 von den zugehörigen Führungseinrichtungen der Drohne außer Eingriff gebracht und/oder die Drohne mit Hilfe einer nicht näher dargestellten Schiebereinrichtung oder mittels eine nachfolgend detaillierter beschriebenen Rückhol-Winde zurück in Richtung der Mitte der Landefläche des Lande-/Startplatzes geschoben werden, um anschließend wieder abheben zu können. Es ist offensichtlich, dass das Führungsmittel 8 (in Kombination mit z.B. einem Kraftstoff-Einfüllrohr oder einer Ladestromzuführung) auch an einer anderen Position angeordnet sein kann, und zwar abhängig davon, wo sich an der Drohne die Tanköffnung oder die Ladebuchse befindet. In jedem Fall greift das Führungsmittel 8 mit entsprechenden Einrichtungen an der Drohne ein, um die Position und Ausrichtung der Drohne zu korrigieren - falls erforderlich.

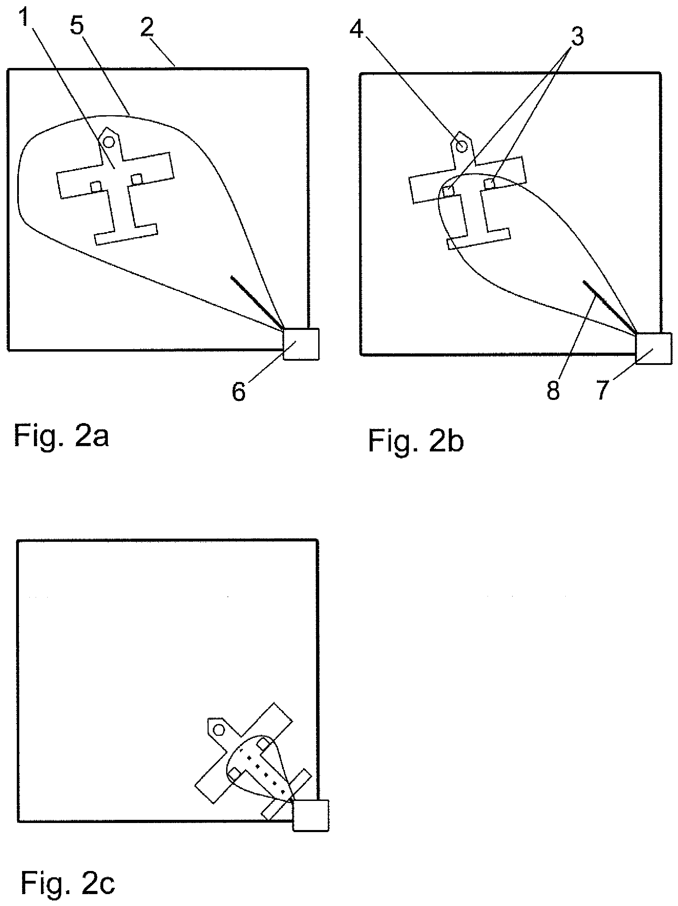

Figuren 2a-2c zeigen eine leicht abgewandelte Lösung, bei der eine Drohne auf der Landefläche des Lande-/Startplatzes 2 gelandet ist. Die Drohne 1 hat drei Standfüße 3 und 4, die verschiedene Ausgestaltungen haben können. Wie in Figur 2a gezeigt, ist auf dem Lande-/Startplatz 2 eine Seilschlinge 5 ausgelegt, die sich in der Ausgangslage im Wesentlichen entlang der äußeren Grenzen der Landefläche des Lande-/Startplatzes 2 erstreckt und vorzugsweise im Wesentlichen die gesamte Fläche des Lande-/Startplatzes umschließt. Wie vorstehend erläutert, wird die Landefläche durch die vollständig ausgelegte Seilschlinge definiert. Wenn die Drohne auf der Landefläche landet, befinden sich alle drei Standfüße der Drohne innerhalb der von der Seilschlinge umschlossenen Fläche.

Wenn, wie in Figuren 2b und 2c gezeigt, die Seilschlinge 5, deren Enden mit einer Seilwinde 6 verbunden sind, von dieser eingezogen wird, rutscht die Seilschlinge 5 unter dem vorderen Standfuß 4 durch und kommt mit den hinteren Standfüßen 3 in Eingriff, so dass die Drohne beim weiteren Zusammenziehen der Seilschlinge leicht geschwenkt und in Richtung auf die Seilwinde 6 gezogen wird. Im Gegensatz zur Lösung aus Figuren 1a-1d, bei der das Bug der Drohne in Richtung auf die Seilwinde 6 bzw. die Belade-/Entladestation 7 gezogen wird, wird bei der Lösung aus Figuren 2a-2c das Heck der Drohne in Richtung auf die Seilwinde 6 bzw. die Belade-/Entladestation 7 gezogen. Diese Option kann gewählt werden, wenn die Drohne 1 von hinten beladen/entladen oder betankt werden muss. Es ist offensichtlich, dass auch andere Konfigurationen möglich sind; wichtig ist nur, dass mindestens einer der Standfüße ausgestaltet ist, um mit der Seilschlinge 5 einzugreifen, wenn diese zugezogen wird. Vorzugsweise sollte die Drohne bei der Landung ihre Ausrichtung grob steuern (d.h. das Heck der Drohne sollte direkt nach ihrer Landung in einem Winkel < 90° zur Winde stehen).

Wie in Figuren 2a-2c gezeigt, steht die Seilwinde 6 auch hier beispielsweise mit einer Belade-/Entladestation 7 in Verbindung, die mit einem Führungsmittel 8 versehen ist, das ausgestaltet ist, um mit zugehörigen Führungseinrichtungen an oder in der Drohne eingreifen zu können. Auch bei dieser Lösung kann die Drohne, nachdem sie mit einer Sendung beladen bzw. entladen ist, mit Hilfe einer Schiebereinrichtung oder einer Rückhol-Winde zurück in Richtung auf die Mitte des Lande-/Startplatzes geschoben werden, um wieder abheben zu können.

Figuren 3a-3e zeigen verschiedene Ausgestaltungen der Standfüße 3, 4 der in Figuren 1a-1d und 2a-2c dargestellten Drohne. Wie in Figur 3a gezeigt, ist der Standfuß in seinem unteren Bereich mit einer Verjüngung 10 versehen, die ausgebildet ist, um mit der Seilschlinge 5 des Positionierungssystems eingreifen zu können, wenn die Seilschlinge eingezogen wird, wohingegen der in Figur 3b gezeigte Standfuß an seinem unteren Ende 11 abgerundet ist, so dass die Seilschlinge, wenn die Drohne auf der Landefläche gelandet ist, beim Einziehen der Seilschlinge unter dem Standfuß durchrutschen kann. Die Ausgestaltungen der Figuren 3c und 3d unterscheiden sich von denen der Figuren 3a-3b nur dadurch, dass die Standfüße an ihrer Unterseite mit einer Rolle oder einem Rollelement 12 versehen sind. Der in Figur 3e gezeigte Standfuß ist ein universell einsetzbarer Drohnen-Standfuß, der ausgestaltet ist, um in einer ersten Konfiguration mit der Seilschlinge eingreifen zu können und um in einer zweiten Konfiguration die Seilschlinge unter der abgerundeten Unterseite durchrutschen zu lassen. Hierzu ist der Standfuß mit ausklappbaren Greifmitteln 13 versehen. In der ersten Konfiguration sind die Greifmittel 13 nach unten geklappt, und in der zweiten Konfiguration sind die Greifmittel 13 nach oben geklappt. Es ist offensichtlich, dass statt der klappbaren Greifmittel auch andere Einrichtungen vorgesehen sein können, wie zum Beispiel eine vertikal verschiebbare Hülse, die am unteren Ende mit einem nach außen vorstehenden Flansch versehen ist. Alternative kann die Drohne mit einem oder mehreren Greifarmen versehen sein, die nach Landung der Drohne aktiviert (z.B. nach unten ausgefahren) werden können, um mit der sich zuziehenden Seilschlinge eingreifen zu können. Weiterhin kann die Kraft der Seilschlinge beim Eingreifen mit dem seilgreifenden Standfuß der Drohne genutzt werden, um Vorgänge auszulösen, wie beispielsweise das Lösen einer Bremsvorrichtung der Drohne.

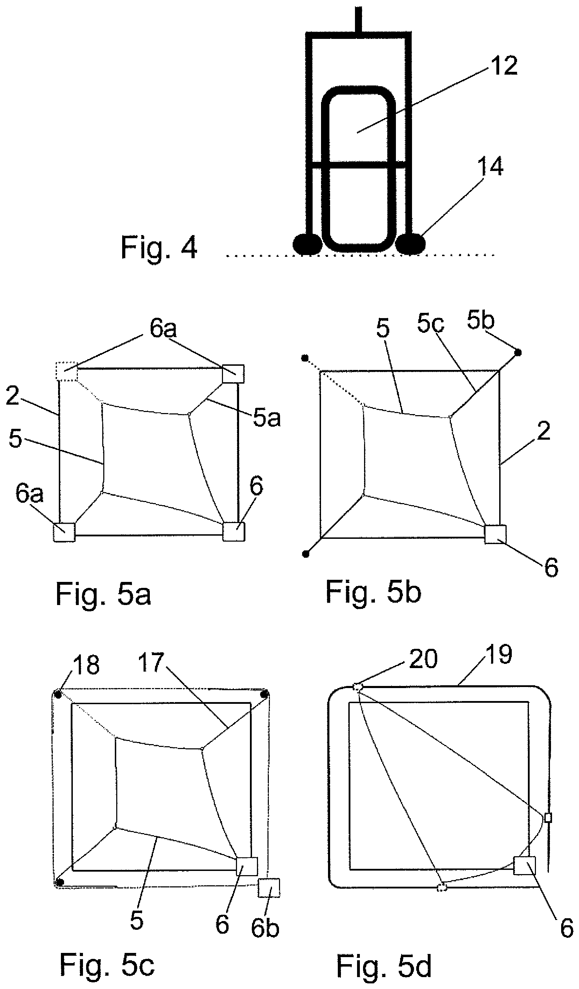

In Figur 4 ist eine alternative Ausführung eines mit einer Rolle 12 versehenen Standfußes gezeigt, der Greifmittel 14 aufweist, die mit der Seilschlinge des Positionierungssystems eingreifen können. Die Greifmittel 14 können abgenommen werden, so dass in dieser Konfiguration die Seilschlinge unter der Rolle durchrutschen kann. Alternativ können die Greifmittel auch vertikal nach oben geschoben werden.

Figuren 5a-5d zeigen bevorzugte Ausgestaltungen des Seilschlingensystems, und insbesondere des Seilschlingen-Rückführungssystems, des Drohnen-Positionierungssystems der vorliegenden Erfindung.

Bei der Ausführung aus Figur 5a sind drei bzw. vier Seilwinden 6, 6a (vorzugsweise jeweils eine Seilwinde an jeder Ecke des Lande-/Startplatzes 2) vorgesehen, wobei zwei oder drei Seilwinden 6a dazu gedacht sind, die Seilschlinge "auszubreiten" bzw. in ihre Ausgangslage zurückzuführen, so dass die Kanten der ausgebreiteten Seilschlinge 5 vorzugsweise etwa entlang der äußeren Grenzen des Lande-/Startplatzes 2 verlaufen, wodurch die Landefläche definiert wird, und die Seilwinde 6 verwendet wird, um die Seilschlinge 5 einzuholen, um eine auf der Landefläche des Lande-/Startplatzes gelandete Drohne in Richtung auf jene Seilwinde 6 zu ziehen und dort genau zu positionieren bzw. genau auszurichten. Die Seile 5a der Seilwinden 6a zum Ausbreiten bzw. Rückführen der Seilschlinge 5 sind vorzugsweise über Ringe verschieblich mit der Seilschlinge 5 verbunden. Wie aus Figur 5a offensichtlich, wird die Seilschlinge 5 ausgelegt, indem die Seilwinden 6a (Rückholwinden) ihr jeweiliges Seil 5a im Wesentlichen vollständig einziehen. Dabei wird das Seil der Seilwinde 6 (Einholwinde) frei ausgegeben. Für den Einholvorgang wird dieser Vorgang umgekehrt, d.h. die Rückholwinden 6a geben (aktiv oder passiv) ihr Seil 5a frei, wohingegen die Einholwinde 6 die Seilschlinge 5 einzieht und damit den oben beschriebenen Positionierungsvorgang ausführt. Das Freigeben des Seiles kann durch Steuerung der Seilwinden oder durch zusätzliche Methoden erfolgen, wie zum Beispiel durch eine Kupplungsmechanik. Die Einholwinde 6 kann beispielsweise mit einer Belade-/Entladestation und/oder mit einer Einrichtung zum Laden der Akkus der Drohne versehen sein.

Bei der Ausführung aus Figur 5b ist nur eine Seilwinde 6 (vorzugsweise an einer Ecke des Lande-/Startplatzes) vorgesehen, wobei nahe oder in Verlängerung der anderen Ecken des Lande-/Startplatzes Befestigungspunkte 5b für Gummibänder 5c vorhanden sind, deren andere Enden jeweils gleitend, vorzugsweise durch Ringe, mit der Seilschlinge 5 verbunden sind. Durch die Wirkung der Gummibänder, die vorzugsweise an den (drei) Ecken des Lande-/Startplatzes vorgesehen sind, an denen sich die Seilwinde 6 (Einholwinde) nicht befindet, wird die Seilschlinge "ausgebreitet", so dass die Kanten der ausgebreiteten Seilschlinge etwa entlang der äußeren Grenzen des Lande-/Startplatzes verlaufen, wodurch die Landefläche definiert wird. Anstelle von Gummibändern können auch andere elastische Elemente verwendet werden, wie zum Beispiel passiv zurückziehende Elemente (z.B. Federn oder federgespannte Winden). Die Seilwinde 6 kann verwendet werden, um die Seilschlinge einzuholen, um eine auf der Landefläche des Lande-/Startplatzes gelandete Drohne zu dieser Seilwinde 6 zu ziehen und dort genau zu positionieren bzw. genau auszurichten. Diese Seilwinde kann beispielsweise mit einer Belade-/Entladestation und/oder mit einer Einrichtung zum Laden der Akkus der Drohne versehen sein.

Bei der Ausführung aus Figur 5c ist eine Seilwinde 6b (vorzugsweise an einer Ecke des Lande-/Startplatzes) vorgesehen, wobei an der Seilschlinge jeweils Zugseile 17 angebracht sind, die über Umlenkrollen 18, die nahe der anderen Ecken des Lande-/Startplatzes vorgesehen sind, mit der Seilwinde 6b (Rückholwinde) verbunden sind. Diese Verbindung kann für jedes Zugseil 17 direkt oder durch ein gemeinsames Führungsseil erfolgen. Durch Betätigen der Seilwinde 6b kann die Seilschlinge 5 "ausgebreitet" werden, so dass die Kanten der ausgebreiteten Seilschlinge etwa entlang der äußeren Grenzen des Lande-/Startplatzes verlaufen. Bei direkter Verbindung mehrerer Zugseile 17 an der Seilwinde 6b können die Trommeln der Seilwinde für jedes Zugseil 17 verschiedene Größen aufweisen, um die unterschiedlichen Längen der Zugseile 17 auszugleichen. Eine weitere Seilwinde 6 (Einholwinde) kann verwendet werden, um die Seilschlinge einzuholen, um eine auf der Landefläche des Lande-/Startplatzes gelandete Drohne zu dieser Seilwinde zu ziehen und dort genau zu positionieren bzw. genau auszurichten. Diese Seilwinde 6 kann zum Beispiel mit einer Belade-/Entladestation und/oder mit einer Einrichtung zum Laden der Akkus der Drohne versehen sein.

Bei der Ausführung aus Figur 5d ist eine Seilwinde 6 (vorzugsweise an einer Ecke des Lande-/Startplatzes) vorgesehen, wobei um den Lande-/Startplatz herum eine Ringbahn 19 vorgesehen ist, an der drei oder mehr Umlaufrollen 20 vorgesehen sind, die auf mechanische Weise entlang der Ringbahn 19 verfahren werden können. Durch Bewegen der Rollen 20 bis in die Ecken der Ringbahn 19 kann die Seilschlinge "ausgebreitet" werden, so dass die Kanten der ausgebreiteten Seilschlinge etwa entlang der äußeren Grenzen des Lande-/Startplatzes verlaufen. Wie vorstehend erläutert, können sowohl der Lande-/Startplatz als auch die eigentliche Landefläche jede beliebige Form haben, woraus offensichtlich wird, dass die Anzahl der Umlaufrollen von der Größe und der Form des Lande-/Startplatzes bzw. der Landefläche abhängt. Die Seilwinde 6 kann verwendet werden, um die Seilschlinge 5 einzuholen, um eine auf der Landefläche des Lande-/Startplatzes gelandete Drohne zu dieser Seilwinde zu ziehen und dort genau zu positionieren bzw. genau auszurichten. Diese Seilwinde kann beispielsweise mit einer Belade-/Entladestation und/oder mit einer Einrichtung zum Laden der Akkus der Drohne versehen sein.

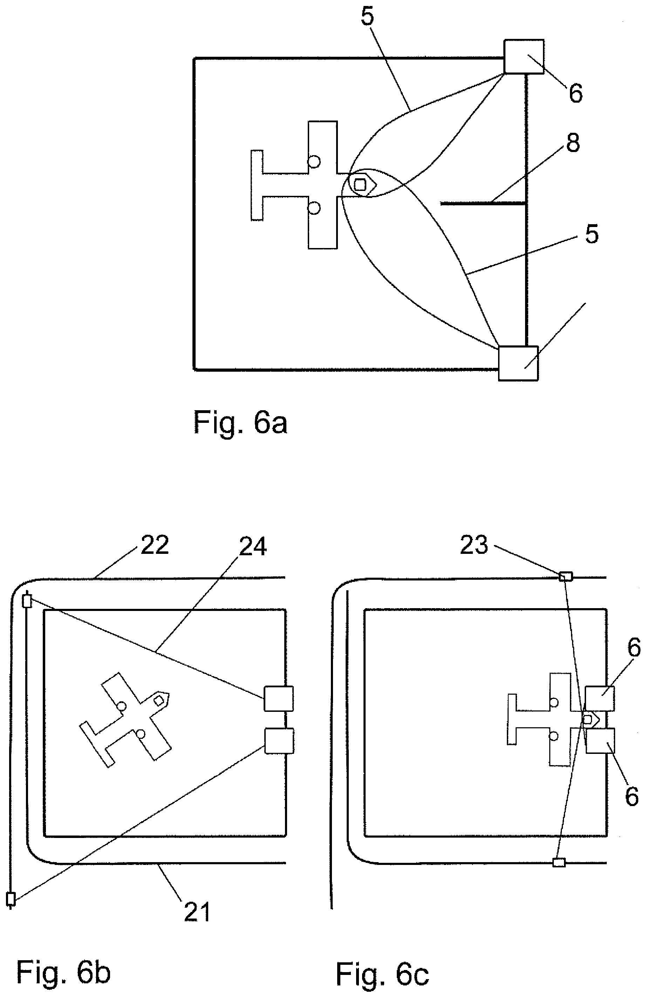

Figuren 6a-6c zeigen weitere bevorzugte Ausgestaltungen des Drohnen-Positionierungssystems der vorliegenden Erfindung.

In Figur 6a werden zwei Seilwinden 6 verwendet, die an zwei benachbarten Ecken des Lande-/Startplatzes angeordnet und jeweils mit einer Seilschlinge 5 versehen sind. Die Seilwinden 6 und die zugehörigen Seilschlingen 5 sind ausgestaltet, um eine Drohne mit korrekter Ausrichtung in eine genaue Position zu bewegen. Ähnlich zu den Ausführungsbeispielen aus Figuren 1a bis 1d, ist auch bei der Ausgestaltung in Figur 6a ein Führungsmittel 8 vorgesehen, um die Drohne noch präziser ausrichten zu können (auch hier kann das Führungsmittel mit Einrichtungen zum Betanken oder zum Laden des Akkus der Drohne versehen sein). Die Standfüße der Drohne wurden bereits unter Bezugnahme auf die vorhergehenden Figuren beschrieben. Die Seilschlingen können nach dem Abheben der Drohne durch Verfahren, wie sie unter Bezugnahme auf Figuren 5a bis 5d beschrieben wurden, in ihre Ausgangslage zurückgebracht werden.

In Figuren 6b und 6c ist eine alternative Ausgestaltung zum automatischen Positionieren einer Drohne gezeigt. Bei dieser Ausgestaltung ist der Lande-/Startplatz von zwei separaten, sich teilweise überlappenden Ringbahnen 21, 22 so umgeben, dass beispielsweise drei der vier Kanten des Lande-/Startplatzes von mindestens einer der Ringbahnen umschlossen ist. Bei anderen Formen des Lande-/Startplatzes sind andere Ausführungen der Ringbahnen möglich. Wichtig ist nur, dass ein wesentlicher Teil des Umfangs des Lande-/Startplatzes von einer bzw. beiden der Ringbahnen umschlossen ist. An jeder der beiden Ringbahnen 21, 22 ist jeweils ein verfahrbares Element 23 vorgesehen, das entlang der jeweiligen Ringbahn 21, 22 verfahren werden kann. Jedes der beiden Elemente 23 ist mit einem zugehörigen Seil 24 verbunden, wobei das andere Ende jedes Seils 24 mit einer zugehörigen Seilwinde 6 verbunden ist. Wie in Figuren 6b und 6c gezeigt, können die Seile 24 durch Bewegen der Elemente 23 in Kombination mit einer entsprechenden Betätigung der Seilwinden 6 so verlagert werden, um mit einem gewünschten Standfuß der Drohne einzugreifen, und um auf diese Weise die gelandete Drohne an eine gewünschte Position (z.B. zwischen die beiden Seilwinden) zu ziehen und dort genau auszurichten bzw. genau zu positionieren. Zwischen den beiden Seilwinden kann beispielsweise eine Belade-/Entladestation und/oder eine Einrichtung zum Laden der Akkus der Drohne vorgesehen sein.

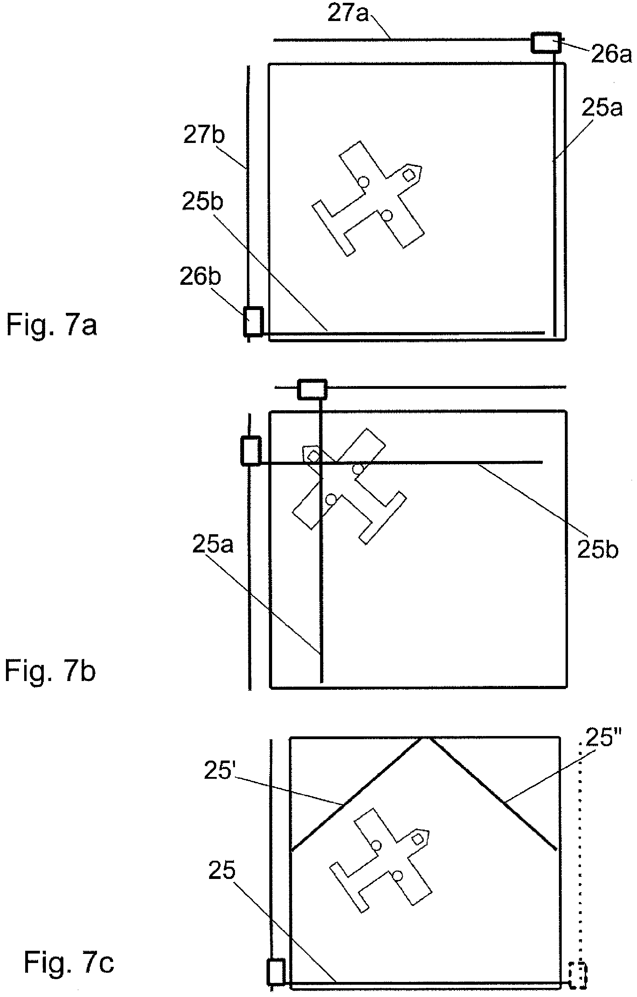

In den Figuren 7a bis 7c sind Ausgestaltungen gezeigt, die Alternativen zu einer Seilschlinge darstellen. In Figuren 7a und 7b erfolgt die Positionierung durch zwei unabhängig voneinander bewegte Fangelemente 25a und 25b, die bevorzugt als gerade Elemente ausgeführt sind. Diese Elemente können durch Seile (Antrieb von beiden Seiten - nicht dargestellt) oder durch steife Elemente, wie z.B. Rohre oder Stangen, ausgeführt sein. Die Elemente 25a und 25b werden durch Verfahrmittel 26a und 26b bewegt, die vorzugsweise auf zugehörigen Schienen 27a bzw. 27b geführt werden. Die Drohne wird nach einer beliebig auf der Landefläche des Lande-/Startplatzes ausgeführten Landung (siehe Figur 7a) durch die Elemente 25a und 25b in die linke obere Ecke positioniert, wo wiederum eine Belade-/ Entladestation (nicht dargestellt) vorgesehen sein kann.

In Figur 7c erfolgt die Positionierung durch eine Kombination aus Fangelementen 25 entsprechend obiger Beschreibung und Führungselementen 25', 25". Hierdurch wird die Drohne in die obere mittlere Position befördert.

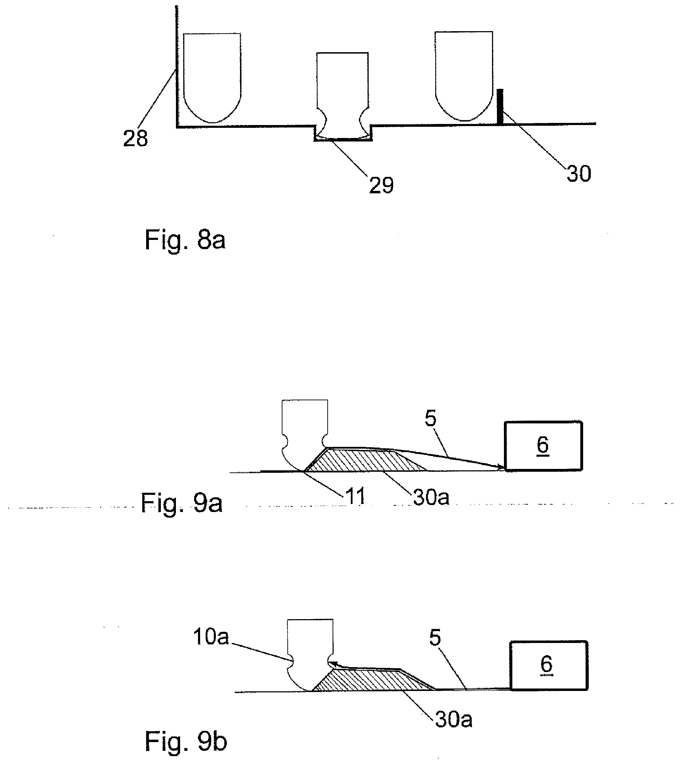

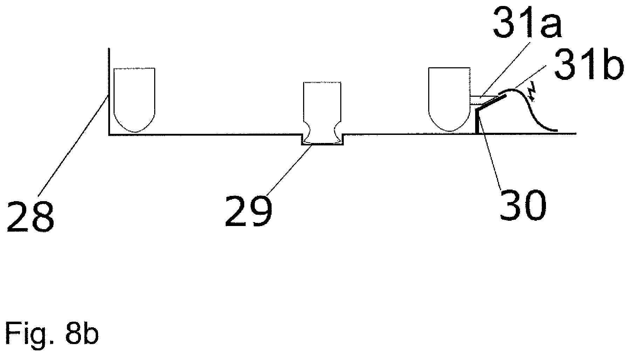

Wie in Figur 8a gezeigt, können auf der Landefläche des Lande-/Startplatzes weitere Elemente zur Führung der Standfüße genutzt werden, insbesondere im Bereich der Einholwinde 6 zur Feinpositionierung beim Einholen der Drohne und zum Leiten beim "Zurückdrücken" der Drohne in die Startposition, falls dies erfolgt. So ist es beispielsweise möglich, verschiedene Führungselemente in Form von Wänden 28, Kanälen 29 und Leitelementen 30 vorzusehen. Diese Führungsmittel können alternativ oder zusätzlich zu dem in Figuren 1a-1d und 2a-2b gezeigten Führungsmittel 8 vorgesehen sein. Wie in Figur 8b gezeigt (siehe rechte Abbildung), können in diesem Zusammenhang die Standfüße mit zusätzlichen Elementen 31a versehen sein, die mit Leitelementen 30 interagieren, die auf der Landefläche des Lande-/Startplatzes vorgesehen sind, und somit Funktionen ermöglichen, wie beispielsweise das Anheben des Standfußes oder das Verbinden des Standfußes der Drohne mit einem Sensor- oder Stromanschluss 31b, um auf diese Weise einen Akku der Drohne aufzuladen. Bereiche mit unterschiedlichen Eigenschaften der Oberfläche 2, wie beispielsweise veränderliche Reibungseigenschaften, können ebenfalls zur Beeinflussung der Bewegung der Drohne genutzt werden.

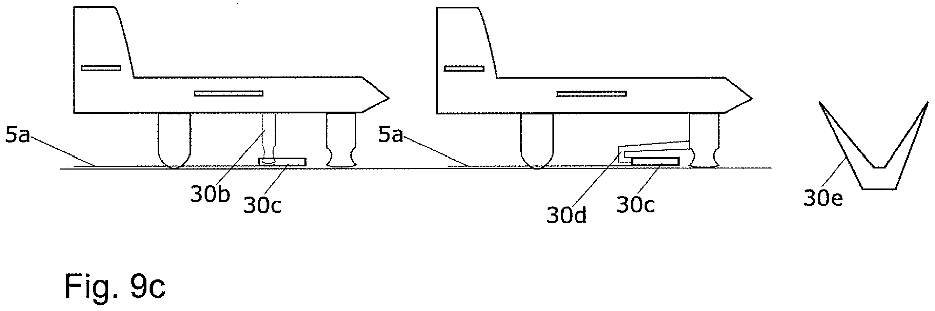

Als erweiterte Ausführung des zuvor insbesondere unter Bezugnahme auf Figuren 1a-1d und Figuren 2a-2c beschriebenen Positionierungssystems kann das Positionieren der Drohne zurück in ihre Startposition (also das Wegziehen der Drohne weg von der Einholwinde 6 bzw. der Belade-/Entladestation 7) ebenfalls durch Nutzung von Rückholwinden und zugehörigen Seilschlingen erfolgen. Zu diesem Zweck sind ein oder mehrere Standfüße der Drohne, die beim Einholen das Seil durchlassen (siehe Figuren 3b und 3d) mit einer höher gelegenen Kerbe bzw. Verjüngung 10a versehen. Beim Einholen der Drohne wird, wie in Figur 9a gezeigt, die Seilschlinge 5 mittels eine Seilwinde 6 (Einholwinde) eingezogen (in Figur 9a von links nach rechts) und rutscht unter dem abgerundeten Ende **11** des Standfußes durch. Der Standfuß steht hierbei in Anlage gegen ein Leitelement 30a, das an beiden Kanten abgeschrägt ist. Beim Rückholvorgang der Drohne (Figur 9b) wird die Seilschlinge durch eine andere Seilwinde (Rückholwinde - nicht gezeigt) in entgegengesetzte Richtung gezogen. Hierbei gleitet die Seilschlinge von rechts nach links über das Leitelement 30a und kommt mit der Kerbe 10a in Eingriff. Wird nun die Seilschlinge 5 weiter nach links gezogen, wird die Drohne nun "rückwärts" in Richtung auf ihre Startposition auf dem Lande-/Startplatz gezogen, wo die Drohne anschließend abheben kann. Das Fangen des Seils in der Kerbe 10a kann auch durch ein zusätzliches Element an der Drohne, das den Boden nicht berührt, realisiert werden. Ebenfalls kann ein zusätzliches Bauteil an der Drohne angebracht werden, welches den Boden nicht berührt und somit nicht mit dem Fangseil (Rückzugseil) 5a interagiert. Dieses Bauteil ist vorzugsweise an der Drohne selbst (siehe Bauteil 30b in der linken Abbildung von Figur 9c) oder an einem Standfuß (siehe Bauteil 30d in der mittleren Abbildung von Figur 9c). Diese Bauteil 30a/30d ist ausgestaltet, um mit einem bevorzugt an einem Rückzugseil 5a montierten, bevorzugt V-förmig ausgeführten Element 30c (siehe linke und mittlere Abbildung von Figur 9c) einzugreifen, wenn das Seil 5a eingezogen wird. Eine Draufsicht einer bevorzugten Ausführung dieses Elements 30e ist in der rechten Abbildung von Figur 9c gezeigt. Dieses Element 30c bzw. 30e, das an dem Rückzugseil 5a angebracht ist, kommt beim Einholen des Seils 5a ein Eingriff mit dem Bauteil 30b bzw. 30d, wodurch das Positionieren der Drohne in die Startposition wesentlich verbessert werden werden. Es ist offensichtlich, dass für die obigen Vorgänge eine koordinierte Steuerung aller Seilwinden erforderlich ist. Vorzugsweise wird die unter Bezugnahme auf Figur 9c beschriebene Lösung in Kombination mit den Führungselementen, die in Figuren 8a und 8b gezeigt sind.

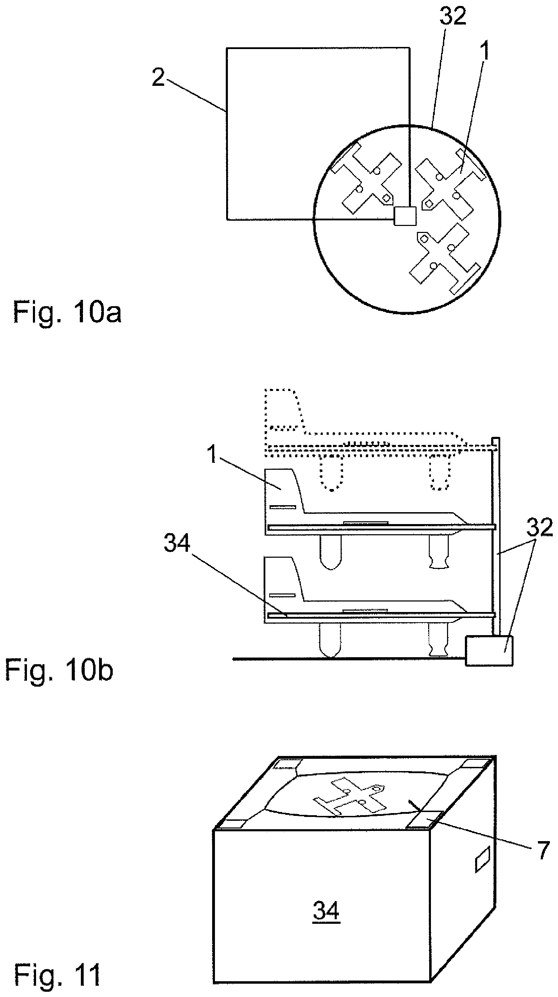

Um mehrere Drohnen bereitzuhalten oder zu empfangen, kann im Bereich einer Seilwinde bzw. Belade-/Entladestation eine Vorrichtung 32 zum Parken von Drohnen 1 vorgesehen sein. Mit Hilfe der Vorrichtung 32 können eine oder mehrere Drohnen vom Lande-/Startplatz 2 heruntergenommen und geparkt werden, und natürlich auch wieder auf dem Lande-/Startplatz abgesetzt werden. Die Vorrichtung kann als drehbare Park-Vorrichtung (siehe Figur 10a) und/oder in Form eines vertikalen Lagers (siehe Figur 10b) ausgeführt sein. Wie am besten in Figur 10b gezeigt, werden die Drohnen durch eine Art Haltestange 34 gehalten. Diese Haltestange 34 kann dem in Figuren 1a-1d gezeigten Führungsmittel 8 entsprechen.

In Figur 11 ist das erfindungsgemäße Positionierungssystem gezeigt, das auf dem Dach einer Paket-Packstation installiert ist. Wie vorstehend erläutert, kann eine Sendung mit Hilfe einer Drohne bei einem Versender abgeholt und an der mit einer Entladestation 7 versehenen Paket-Packstation 34 entladen werden. Neben der Entladestation 7 ist auf dem Dach der Paket-Packstation 34 ein Positionierungssystem vorgesehen, das beispielsweise dem System aus Figur 5a entsprechen kann. Die Paket-Packstation kann mit einer internen Transportanlage versehen sein, um die Sendungen in die entsprechenden Postfächer (Empfänger) zu transportieren.

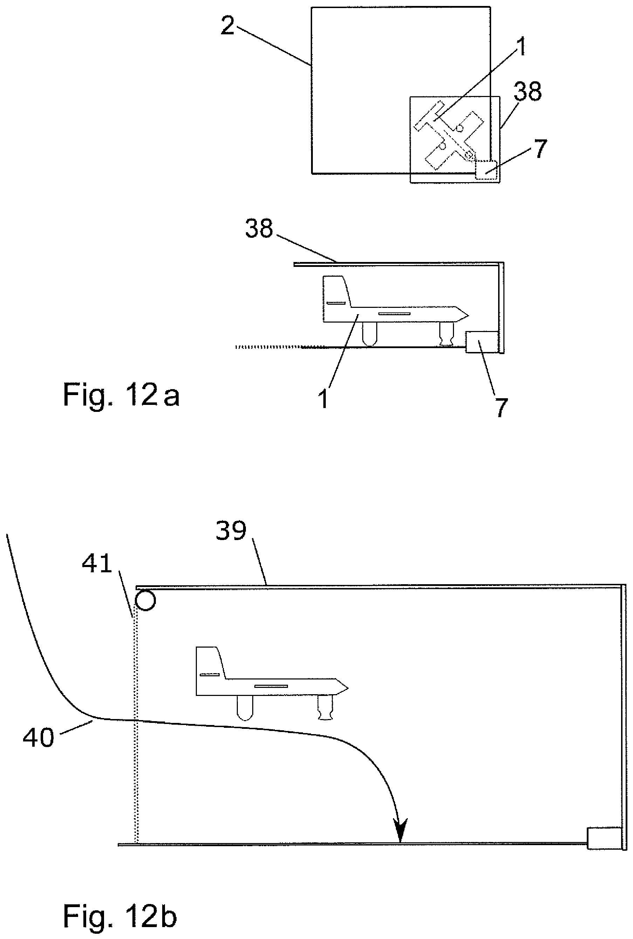

Wie in Figur 12a gezeigt, wird eine Erweiterung der vorstehend beschriebenen Ausführungen durch Vorsehen eines Wetterschutzes 38 (z.B. Dach) erreicht. Hierdurch kann die Drohne 1 auf dem Lande-/Startplatz 2 während des Beladens/Entladens, Betankens, etc. an der Station 7 und zwecks Lagerung in Flugpausen geschützt werden. Die Oberfläche des Land-/Startplatzes 2 ist in dieser Ausführung bevorzugt wasserdurchlässig ausgeführt. Eine Erweiterung (siehe Figur 12b) wird durch eine Umhausung des gesamten Systems 39 erreicht, bei welchem die Drohne horizontal einfliegt und dann landet (der Flugweg ist mit Bezugszeichen 40 bezeichnet). Die Einflugöffnung der Umhausung kann durch einen bevorzugt als Rolltor ausgestalteten Verschluss 41 geschützt werden. Diese Ausführung ist insbesondere für den Einsatz in Gebieten geeignet, in denen häufige Störungen durch Umwelteinflüsse zu erwarten sind, wie etwas Schnee oder Verschmutzungen. Ein solches System kann auch in ein Gebäude integriert werden.

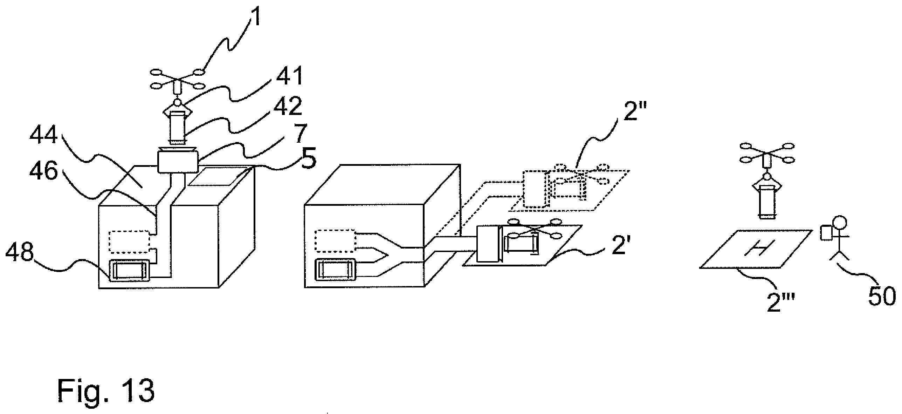

Figur 13 zeigt eine schematische Darstellung eines beispielhaften Transportsystems, bei dem das Positionierungssystem der vorliegenden Erfindung Verwendung finden kann. Ein wesentlicher Bestandteil des Transportsystems ist eine Drohne 1 in beliebiger Ausführung, die mit einem Haltemechanismus 41 für eine Rohrpostbüchse 42 ausgestattet ist. Dieser Haltemechanismus kann auf verschiedene Weise realisiert sein. Neben dem gezeigten Greifmechanismus sind Ausgestaltungen möglich, bei denen die Sendung vertikal von unten bzw. horizontal von hinten oder vorne in den Grundkörper der Drohne eingesetzt wird.

Am Boden vor einem Gebäude oder auf dem Dach eines Gebäudes 44 sind eine oder mehrere Belade-/Entladestationen 7 vorgesehen, die das Bindeglied zwischen einer Drohne 1 und einem Rohrpostsystem 46 (allgemein Transportanlage) bilden. Die Belade-/Entladestation(en) 7 und das Rohrpostsystem 46 sind vorrangig vor, in oder auf dem Gebäude 6 vorgesehen. Auf dem Dach eines Gebäudes oder vor einem Gebäude befinden sich ein oder mehrere Lande-/ Startplätze 2; 2', 2" für die Drohnen. Wie gezeigt und vorstehend erläutert, können eine oder mehrere zugehörige Belade-/Entladestationen 7 vorgesehen sein, um eine Drohne zu beladen bzw. zu entladen. Der Versand und Empfang einer Sendung durch einen Nutzer erfolgt an Rohrpoststationen 48 (Übergabestationen), die einzeln oder mehrfach in einem Gebäude vorhanden sein können.

Vorzugsweise sind die Belade-/Entladestationen 7 zum Entladen und Beladen einer Drohne ausgestaltet. Die beiden linken Abbildungen von Figur 13 zeigen Beispiele für das vertikale bzw. horizontale Beladen/Entladen einer Drohne. Wie in der rechten Abbildung von Figur 13 gezeigt, kann die Drohne aber auch einen Lande-/Startplatz 2‴ anfliegen, um manuell von einem Nutzer 50 beladen bzw. entladen zu werden. Vorzugweise sind aber alle Lande-/Startplätze mit dem erfindungsgemäßen System zum automatischen Positionieren von Drohne ausgestattet.

## Patentansprüche

1. System zum automatischen Positionieren einer Drohne (1) auf einem Lande-/Startplatz (2), der eine durch eine Außengrenze definierte Landefläche umfasst, wobei das System ferner umfasst:
eine Seilschlinge (5), und
eine Drohne (1),
wobei das System ausgestaltet ist, um eine an einer beliebigen Stelle auf der Landefläche gelandete Drohne (1) an einer vorbestimmten Position auf der Landefläche zu positionieren und auszurichten,
wobei die Seilschlinge (5) in ihrer Ausgangslage entlang der Außengrenze der Landefläche verläuft und deren Enden mit einer nahe oder an der vorbestimmten Position angeordneten Seilwinde (6) verbunden sind, so dass die Seilschlinge beim Betätigen der Seilwinde eingezogen werden kann, und
wobei die Drohne mit Eingriffseinrichtungen (3, 4) versehen ist, die ausgebildet sind, um beim Einziehen der Seilschlinge (5) mit der Seilschlinge (5) in Eingriff zu kommen, so dass die Drohne (1) beim weiteren Einziehen der Seilschlinge (5) in die vorbestimmte Position gezogen und dort korrekt ausgerichtet wird.

2. System zum automatischen Positionieren einer Drohne nach Anspruch 1, wobei das System Rückführungseinrichtungen aufweist, die ausgestaltet sind, um eine Seilschlinge (5) auf dem Lande-/Startplatz (2) in ihre Ausgangslage auszulegen, so dass die Seilschlinge (5) entlang der Außengrenze der Landefläche verläuft und die gesamte Landefläche umschließt.

3. System zum automatischen Positionieren einer Drohne nach einem der vorhergehenden Ansprüche, wobei die Eingriffseinrichtungen (3, 4) der Drohne (1) durch mindestens drei Standfüße (3, 4) gebildet sind, wobei mindestens einer der Standfüße so ausgestaltet ist, dass die Seilschlinge (5) beim Einziehen der Seilschlinge unter diesem mindestens einen (seildurchlassenden) Standfuß durchrutscht, und wobei mindestens einer der Standfüße als Eingriffseinrichtung ausgestaltet ist, so dass dieser mindestens eine (seilfangende) Standfuß beim Einziehen der Seilschlinge mit der Seilschlinge (5) eingreift, um die Drohne (1) beim weiteren Einziehen der Seilschlinge (5) in die vorbestimmten Position zu ziehen, wobei optional mindestens einer der Standfüße ausgestaltet ist, um mit Führungselementen (28, 29, 30) eingreifen und von diesen geführt werden zu können, die auf der Landefläche des Lande-/Startplatzes vorgesehen sind, und wobei optional mindestens einer der Standfüße mit zusätzlichen Elementen (31a) versehen ist, die mit den Führungselementen interagieren können, um weitere Funktionen zu ermöglichen.

4. System zum automatischen Positionieren einer Drohne nach Anspruch 3, wobei der mindestens eine seildurchlassende Standfuß der Drohne in seinem unteren Bereich mit einer Verjüngung (10) versehen ist, die ausgebildet ist, um mit der Seilschlinge (5) eingreifen zu können, und wobei der mindestens eine seilfangende Standfuß an seinem unteren Ende (11) abgerundet ist, so dass die Seilschlinge beim Einziehen der Seilschlinge unter dem Standfuß durchrutschen kann, wobei optional an der Drohne ein zusätzliches Bauteil (30b, 30d) vorgesehen ist, das den Boden des Lande-/ Startplatzes nicht berührt und ausgestaltet ist, um mit einem Element (30c) eingreifen zu können, das an der Seilschlinge (5; 5a) angebracht ist.

5. System zum automatischen Positionieren einer Drohne nach einem der Ansprüche 1 und 2, wobei die Eingriffseinrichtungen (3, 4) der Drohne (1) durch mindestens drei Standfüße (3, 4) gebildet sind, wobei mindestens einer der Standfüße mit einer abgerundeten Unterseite versehen und ausgestaltet ist, um in einer ersten Konfiguration mit der Seilschlinge eingreifen zu können und um in einer zweiten Konfiguration die Seilschlinge unter seiner abgerundeten Unterseite durchrutschen zu lassen, wobei dieser mindestens eine Standfuß mit ausklappbaren Greifmitteln (13) versehen ist, die in der ersten Konfiguration nach unten geklappt und in der zweiten Konfiguration nach oben geklappt sind, oder wobei dieser mindestens eine Standfuß eine vertikal verschiebbare Hülse aufweist, die am unteren Ende mit einem nach außen vorstehenden Flansch versehen ist.

6. System zum automatischen Positionieren einer Drohne nach einem der vorhergehenden Ansprüche, wobei das System eine mit der Seilwinde (6) gekoppelte Schiebereinrichtung aufweist, um die Drohne zurück in Richtung der Mitte der Landefläche schieben zu können, wobei im Bereich einer Seilwinde (6) optional eine Vorrichtung (32) zum Parken von Drohnen (1) vorgesehen ist, die ausgestaltet ist, um eine oder mehrere Drohnen von der Landefläche herunternehmen zu können, zu parken, und wieder auf die Landefläche absetzen zu können.

7. System zum automatischen Positionieren einer Drohne nach einem der vorhergehenden Ansprüche, wobei mindestens zwei weitere Seilwinden (6a) beabstandet entlang der Außengrenze der Landefläche vorgesehen sind, die über zugehörige Seile (5a) mit der Seilschlinge (5) verbunden und ausgestaltet sind, um die Seilschlinge (5) in ihre Ausgangslage auszubreiten, so dass die Kanten der ausgebreiteten Seilschlinge (5) entlang der Außengrenze der Landefläche verlaufen, wobei die Seile (5a) der Seilwinden (6a) optional über Ringe verschieblich mit der Seilschlinge (5) verbunden sind.

8. System zum automatischen Positionieren einer Drohne nach einem der vorhergehenden Ansprüche, wobei beabstandet entlang der Außengrenze der Landefläche mindestens zwei Befestigungspunkte (5b) vorgesehen sind, an denen erste Enden von elastischen Elementen (5c) befestigt sind, deren zweite Enden jeweils, vorzugsweise gleitend oder durch Ringe, mit der Seilschlinge (5) verbunden sind, um die Seilschlinge (5) durch Wirkung der elastischen Elemente in ihre Ausgangslage auszubreiten, so dass die Kanten der ausgebreiteten Seilschlinge (5) entlang der Außengrenze der Landefläche verlaufen, wobei die elastische Elemente aus einer Gruppe ausgewählt sind, die Gummibänder, Federn und federgespannte Winden umfasst.

9. System zum automatischen Positionieren einer Drohne nach einem der vorhergehenden Ansprüche, ferner umfassend mindestens ein Zugseil (17) und eine weitere Seilwinde (6b), die an der Außengrenze der Landefläche zum Einziehen von dem mindestens einem Zugseil (17) vorgesehen ist, wobei zwei oder mehr Enden des Zugseils (17) über Umlenkrollen (18), die beabstandet entlang der Außengrenze der Landefläche vorgesehen sind, so an der Seilschlinge (5) angebracht sind, dass die Seilschlinge (5) durch Betätigen der weiteren Seilwinde (6b) ausgebreitet werden kann, so dass die Kanten der ausgebreiteten Seilschlinge (5) entlang der Außengrenze der Landefläche verlaufen.

10. System zum automatischen Positionieren einer Drohne nach einem der vorhergehenden Ansprüche, wobei um die Landefläche herum eine Ringbahn (19) vorgesehen ist, an der mindestens drei auf mechanische Weise entlang der Ringbahn verfahrbare Umlaufrollen (20) vorgesehen sind, die mit der Seilschlinge (5) gekoppelt sind, wobei die Seilschlinge (5) durch Bewegen der Umlaufrollen (20) ausgebreitet werden kann, so dass die Kanten der ausgebreiteten Seilschlinge entlang der Außengrenze der Landefläche verlaufen.

11. System zum automatischen Positionieren einer Drohne nach einem der vorhergehenden Ansprüche, wobei zwei Seilwinden (6) vorgesehen sind, die beabstandet voneinander an der Außengrenze der Landefläche angeordnet und jeweils mit einer zugehörigen Seilschlinge (5) versehen sind, wobei die Eingriffsmittel der Drohne durch mindestens drei Standfüße gebildet sind, und wobei die Seilschlingen beim Einziehen der Seilschlingen jeweils mit einem bestimmten Standfuß der Drohne in Eingriff kommen, um die Drohne in die vorbestimmte Position zu bewegen.

12. System zum automatischen Positionieren einer Drohne nach Anspruch 1, ferner umfassend eine Belade-/Entladestation (7) einer Transportanlage,
wobei die Seilwinde (6) mit der Belade-/Entladestation (7) in Verbindung steht, um die Drohne mit einer über die Transportanlage zugeführten Sendung beladen bzw. entladen zu können, und wobei die Seilwinde optional mit der Belade-/Entladestation integriert ist, und/oder
wobei die Seilwinde (6) mit einer Betankungsanlage zum Betanken der Drohne und/oder mit einer Ladestation zum Aufladen eines Akkus der Drohne in Verbindung steht.

13. System zum automatischen Positionieren einer Drohne nach einem der vorhergehenden Ansprüche, wobei die Seilwinde (6) mit einem Führungsmittel (8) versehen ist, das ausgestaltet ist, um mit entsprechenden Führungseinrichtungen einzugreifen, die an oder in der Drohne vorgesehen sind, um die Drohne noch präziser positionieren und ausrichten zu können, wenn sich die Drohne der Seilwinde nähert, und/oder wobei die Eingriffsmittel der Drohne (1) durch mindestens drei Standfüße (3, 4) gebildet sind, wobei mindestens einer der Standfüße ausgestaltet ist, um mit Führungselementen (28, 29, 30) eingreifen und von diesen geführt werden zu können, die auf der Landefläche des Lande-/Startplatzes vorgesehen sind, um, wenn dieser mindestens eine Standfuß beim Einziehen einer Seilschlinge durch die Seilwinde mit der Seilschlinge (5) eingreift, die Drohne (1) beim weiteren Einziehen der Seilschlinge (5) präzise positionieren und ausrichten zu können.

14. System zum automatischen Positionieren einer Drohne (1) auf einem Lande-/Startplatz (2), der eine durch eine Außengrenze definierte Landefläche umfasst,
wobei das System ferner umfasst:
zwei separate Ringbahnen (21, 22), und
eine Drohne (1) ,
wobei das System ausgestaltet ist, um eine an einer beliebigen Stelle auf der Landefläche gelandete Drohne (1) an einer vorbestimmten Position auf der Landefläche zu positionieren und auszurichten,
wobei die Landefläche von den zwei separaten, sich teilweise überlappenden Ringbahnen (21, 22) so umgeben ist, dass die Landefläche von mindestens einer der Ringbahnen umschlossen ist,
wobei an jeder der beiden Ringbahnen (21, 22) jeweils ein verfahrbares Element (23) vorgesehen ist, das entlang der jeweiligen Ringbahn (21, 22) verfahrbar ist, wobei jedes der beiden Elemente (23) mit einem Ende eines zugehörigen Seils (24) verbunden ist, wobei das andere Ende jedes Seils (24) mit einer zugehörigen Seilwinde (6) verbunden ist,
wobei die Seile (24) durch Bewegen der Elemente (23) in Kombination mit einer Betätigung der Seilwinden (6) so verlagert werden, um mit an der Drohne vorgesehenen Eingriffseinrichtungen einzugreifen, so dass die Drohne (1) beim weiteren Verlagern der Seile in die vorbestimmte Position bewegt wird.

15. System zum Transportieren verschiedener Güter von einem Ursprungsort zu einem entfernt gelegenen Bestimmungsort unter Verwendung einer Drohne (1), wobei das System umfasst: mindestens eine stationäre Transportanlage und mindestens ein System zum automatischen Positionieren einer Drohne auf einem Lande-Startplatz (2) nach einem der vorhergehenden Ansprüche, wobei die mindestens eine Transportanlage mit mindestens einer Belade-/Entladestation (7) in Verbindung steht.

## Claims

1. A system for automatically positioning a drone (1) on a landing/take-off site (2) comprising a landing area defined by an outer boundary, wherein the system further comprises:
a rope sling (5), and
a drone (1),
wherein the system is configured to position and align a drone (1), landed at any location on the landing area, at a predetermined position on the landing area,
wherein the rope sling (5), in its initial position, extends along the outer boundary of the landing area, and the ends of which are connected to a rope winch (6) located near or at the predetermined position, so that the rope sling can be retracted when the rope winch is actuated, and
wherein the drone is provided with engagement means (3, 4) configured to be engageable with the rope sling (5) when the rope sling (5) is retracted, so that the drone (1) is pulled to the predetermined position and is correctly aligned at the predetermined position upon further retraction of the rope sling (5).

2. The system for automatically positioning a drone according to claim 1, wherein the system comprises reversing means configured to deploy a rope sling (5) on the landing/take-off site (2) to its initial position such that the rope sling (5) extends along the outer boundary of the landing area and encloses the entire landing area.

3. The system for automatically positioning a drone according to any one of the preceding claims, wherein the engagement means (3, 4) of the drone (1) comprise at least three feet (3, 4), wherein at least one of the feet is configured such that the rope sling (5) slips under said at least one (rope-passing) foot when the rope sling is retracted, and wherein at least one of the feet is configured as an engagement means such that said at least one (rope-catching) foot engages with the rope sling (5) when the rope sling is retracted, to pull the drone (1) into the predetermined position upon further retraction of the rope sling (5), wherein optionally at least one of the feet is configured to be engageable with guide elements (28, 29, 30) and to be guided by said guide elements which are provided on the landing area of the landing/take-off site, and wherein optionally at least one of the feet is provided with additional elements (31a) that can interact with the guide elements to enable further functions.

4. The system for automatically positioning a drone according to claim 3, wherein the at least one rope-passing foot of the drone is provided at its lower portion with a tapering (10) configured to be engageable with the rope sling (5), and wherein the at least one rope-catching foot is rounded at its lower end (11) such that the rope sling can slip under the foot when the rope sling is retracted, wherein optionally an additional component (30b, 30d) is provided at the drone that does not contact the surface of the landing/take-off site and is configured to be engageable with an element (30c) attached to the rope sling (5; 5a).

5. The system for automatically positioning a drone according to any one of claims 1 and 2, wherein the engagement means (3, 4) of the drone (1) comprise at least three feet (3, 4), wherein at least one of the feet is provided with a rounded bottom and is configured to be engageable with the rope sling in a first configuration, and to allow the rope sling to slip under its rounded bottom in a second configuration, wherein said at least one foot is provided with fold-out gripping means (13) folded down in said first configuration and folded up in said second configuration, or wherein said at least one foot comprises a vertically displaceable sleeve provided with an outwardly projecting flange at the lower end.

6. The system for automatically positioning a drone according to any one of the preceding claims, wherein the system comprises pusher means coupled to the rope winch (6) to enable the drone to be pushed back towards the center of the landing area, wherein a device (32) for parking drones (1) is provided in the region of a rope winch (6), which parking device is configured to allow one or more drones to be removed from the landing area, parked, and moved back onto the landing area.

7. The system for automatically positioning a drone according to any one of the preceding claims, wherein at least two additional rope winches (6a) are provided which are spaced along the outer boundary of the landing area, connected to the rope sling (5) via associated ropes (5a) and configured to return the rope sling (5) to its initial position, such that the edges of the returned rope sling (5) extend along the outer boundary of the landing area, wherein the ropes (5a) of the rope winches (6a) are displaceably connected to the rope sling (5), optionally via rings.

8. The system for automatic positioning of a drone according to any one of the preceding claims, wherein, spaced along the outer boundary of the landing area, at least two attachment points (5b) are provided to which are attached first ends of elastic elements (5c), the second ends of which are each connected, preferably slidingly or by rings, to the rope sling (5) in order to spread the rope sling (5) to its initial position by action of the elastic elements, such that the edges of the spread-out rope sling (5) extend along the outer boundary of the landing area, wherein the elastic elements are selected from a group comprising rubber bands, springs and spring-tensioned winches.

9. The system for automatically positioning a drone according to any one of the preceding claims, further comprising at least one traction rope (17) and an additional winch (6b) which is provided at the outer boundary of the landing area for retracting the at least one traction rope (17), wherein two or more ends of the traction rope (17) are attached to the rope sling via pulleys (18), which are provided spaced apart along the outer boundary of the landing area, such that the rope sling (5) can be spread out by operating the additional rope winch (6b) such that the edges of the spread-out rope sling (5) extend along the outer boundary of the landing area.

10. The system for automatically positioning a drone according to any one of the preceding claims, wherein a ring track (19) is provided around the landing area, on which at least three pulleys (20) movable in a mechanical manner along the ring track are provided, which pulleys are coupled to the rope sling (5), wherein the rope sling (5) can be spread out by moving the pulleys (20), such that the edges of the spread-out rope sling extend along the outer boundary of the landing area.

11. The system for automatically positioning a drone according to any one of the preceding claims, wherein two rope winches (6) are provided, which are spaced apart from each other along the outer boundary of the landing area and each provided with an associated rope sling (5), wherein the engagement means of the drone comprise at least three feet, and wherein the rope slings each engaging a predetermined foot of the drone, when the rope slings are retracted, to move the drone to the predetermined position.

12. The system for automatically positioning a drone according to claim 1, further comprising a loading/unloading station (7) of a transport system,
wherein the rope winch (6) is connected to the loading/unloading station (7) to enable the drone to be loaded/unloaded with a shipment delivered via the transport system, and wherein the rope winch is optionally integrated with the loading/unloading station, and/or
wherein the rope winch (6) is connected to a refueling facility for refueling the drone and/or to a charging station for charging a battery of the drone.

13. The system for automatically positioning a drone according to any one of the preceding claims, wherein the rope winch (6) is provided with guide means (8) configured to engage with corresponding guide means provided at or in the drone to further precisely position and align the drone when the drone approaches the rope winch, and/or wherein the engagement means of the drone (1) comprise at least three feet (3, 4), wherein at least one of the feet is configured to engage with and to be guided by guiding elements (28, 29, 30) provided on the landing area of the landing/take-off site, such that, when said at least one foot engages with the rope sling (5) during retraction of a rope sling by the rope winch, the drone (1) can be precisely positioned and aligned, when the rope sling (5) is further retracted.

14. The system for automatically positioning a drone (1) on a landing/take-off site (2) comprising a landing area defined by an outer boundary, wherein the system further comprises:
two separate ring tracks (21, 22), and
a drone (1),
wherein the system is configured to position and align a drone (1), landed at any location on the landing area, at a predetermined position on the landing area,
wherein the landing area is surrounded by said two separate, partially overlapping ring tracks (21, 22) such that the landing area is enclosed by at least one of the ring tracks,
wherein a respective movable element (23) is provided at each of the two ring tracks (21, 22) which is movable along the respective ring track (21, 22), wherein each of the two elements (23) is connected to one end of an associated rope (24), wherein the other end of each rope (24) is connected to an associated rope winch (6),
wherein the ropes (24) are displaced by moving the elements (23) in combination with actuation of the rope winches (6) so as to engage with engagement means provided at the drone, such that the drone (1) is moved to the predetermined position upon further displacement of the ropes.

15. A system for transporting various goods from a point of origin to a remote destination by using a drone (1), wherein the system comprises:
at least one stationary transport system and at least one system for automatically positioning a drone on a landing/take-off site (2) according to any one of the preceding claims, wherein the at least one transport system is connected with at least one loading/unloading station (7).

## Revendications

1. Système de positionnement automatique d'un drone (1) sur un emplacement d'atterrissage/décollage (2) comportant une surface d'atterrissage définie par une limite extérieure, le système comprenant en outre:
une boucle de câble (5), et
un drone (1),
le système étant agencé pour positionner et orienter dans une position prédéfinie sur la surface d'atterrissage, un drone (1) ayant atterri à un endroit quelconque de la surface d'atterrissage,
la boucle de câble (5) s'étendant, dans sa position initiale, le long de la limite extérieure de la surface d'atterrissage, et ses extrémités étant reliées à un treuil (6) disposé à proximité ou dans la position prédéfinie, de sorte que la boucle de câble puisse être rétractée lors de l'actionnement du treuil, et
le drone étant doté de dispositifs d'engagement (3, 4) qui sont agencés pour entrer en prise avec la boucle de câble (5) lors de la rétraction de la boucle de câble (5), de manière à ce que, lorsque la boucle de câble (5) continue d'être rétractée, le drone (1) soit tiré dans la position prédéfinie et correctement positionné dans celle-ci.

2. Système de positionnement automatique d'un drone selon la revendication 1, **caractérisé en ce que** le système présente des dispositifs de retour qui sont agencés pour déposer une boucle de câble (5) dans sa position initiale sur l'emplacement d'atterrissage/de décollage (2), de sorte que la boucle de câble (5) s'étend le long de la limite extérieure de la surface d'atterrissage et entoure la totalité de la surface d'atterrissage.

3. Système de positionnement automatique d'un drone selon une des revendications précédentes, dans lequel les dispositifs d'engagement (3, 4) du drone (1) sont constitués d'au moins trois pieds (3, 4), au moins un des pieds étant agencé de manière à ce que, lors de la rétraction de la boucle de câble, la boucle de câble (5) glisse sous ce pied (de passage de câble), au nombre d'au moins un, et au moins un des pieds étant réalisé comme dispositif d'engagement, de sorte que ce pied (de retenue de câble), au nombre d'au moins un, entre en prise avec la boucle de câble (5) lors de la rétraction de la boucle de câble, afin de tirer le drone (1) dans la position prédéfinie lorsque la rétraction de la boucle de câble (5) se poursuit, sachant que, de manière facultative, au moins un des pieds est agencé pour entrer en prise avec des éléments de guidage (28, 29, 30), prévus sur la surface d'atterrissage de l'emplacement d'atterrissage/de décollage, et pour être guidé par ceux-ci, et que, de manière facultative, au moins un des pieds est doté d'éléments (31a) supplémentaires qui peuvent interagir avec les éléments de guidage pour permettre d'autres fonctions.

4. Système de positionnement automatique d'un drone selon la revendication 3, dans lequel le pied de passage de câble, au nombre d'au moins un, du drone est pourvu, dans sa partie inférieure, d'un rétrécissement (10) qui est agencé pour pouvoir entrer en prise avec la boucle de câble (5), et le pied de retenue de câble, au nombre d'au moins un, est arrondi à son extrémité inférieure (11), de manière à ce que la boucle de câble puisse glisser sous le pied lorsqu'elle est rétractée, sachant qu'il est prévu de manière facultative sur le drone, un composant (30b, 30d) supplémentaire qui n'est pas en contact avec le plancher de l'emplacement d'atterrissage/de décollage et qui est agencé pour pouvoir entrer en prise avec un élément (30c) qui est monté sur la boucle de câble (5, 5a).

5. Système de positionnement automatique d'un drone selon une des revendications 1 et 2, dans lequel les dispositifs d'engagement (3, 4) du drone (1) sont constitués d'au moins trois pieds (3, 4), au moins un des pieds étant doté d'une face inférieure arrondie et étant agencé pour pouvoir entrer en prise avec la boucle de câble, dans une première configuration, et pour pouvoir laisser glisser la boucle de câble sous sa surface inférieure arrondie, dans une deuxième configuration, ledit pied, au nombre d'au moins un, étant doté de moyens de préhension (13) pouvant être dépliés, qui sont pliés vers le bas dans la première configuration et sont pliés vers le haut dans la deuxième configuration, ou ledit pied, au nombre d'au moins un, présentant un manchon déplaçable verticalement, qui est muni à son extrémité inférieure d'un collet faisant saillie vers l'extérieur.

6. Système de positionnement automatique d'un drone selon une des revendications précédentes, dans lequel le système présente un dispositif poussoir qui est couplé au treuil (6) et est destiné à pousser le drone pour pouvoir le ramener en direction du centre de la surface d'atterrissage, sachant qu'il est prévu dans la région d'un treuil (6), de manière facultative, un dispositif (32) de stationnement de drones (1), qui est agencé pour pouvoir retirer un ou plusieurs drones de la surface d'atterrissage, les faire stationner, puis les déposer de nouveau sur la surface d'atterrissage.

7. Système de positionnement automatique d'un drone selon une des revendications précédentes, dans lequel il est prévu au moins deux autres treuils (6a) qui sont espacés le long de la limite extérieure de la surface d'atterrissage et sont reliés à la boucle de câble (5) par des câbles (5a) associés et sont agencés pour étaler la boucle de câble (5) dans sa position initiale, de sorte que les bords de la boucle de câble (5) étalée s'étendent le long de la limite extérieure de la surface d'atterrissage, les câbles (5a) des treuils (6a) étant reliés à la boucle de câble (5) de manière déplaçable par l'intermédiaire d'anneaux.

8. Système de positionnement automatique d'un drone selon une des revendications précédentes, dans lequel il est prévu, le long de la limite extérieure de la surface d'atterrissage, avec un espacement, au moins deux points de fixation (5b) auxquels sont fixées des premières extrémités d'éléments élastiques (5c) dont les deuxièmes extrémités sont reliées respectivement à la boucle de câble (5), de préférence de manière coulissante ou par l'intermédiaire d'anneaux, pour étaler la boucle de câble (5) dans sa position initiale sous l'action des éléments élastiques, de sorte que les bords de la boucle de câble (5) étalée s'étendent le long de la limite extérieure de la surface d'atterrissage, les éléments élastiques étant choisis dans un groupe comprenant des bandes en caoutchouc, des ressorts et des treuils sollicités par ressort.

9. Système de positionnement automatique d'un drone selon une des revendications précédentes, comprenant en outre au moins un câble de traction (17) et un treuil (6b) supplémentaire qui est prévu sur la limite extérieure de la surface d'atterrissage, aux fins de rétracter le câble de traction (17), au nombre d'au moins un, deux ou plusieurs extrémités du câble de traction (17) étant disposées sur la boucle de câble (5), par l'intermédiaire de poulies de renvoi (18) prévues avec un espacement le long de la limite extérieure de la surface d'atterrissage, de manière à ce que la boucle de câble (5) puisse être étalée en actionnant le treuil (6b) supplémentaire, de sorte que les bords de la boucle de câble (5) étalée s'étendent le long de la limite extérieure de la surface d'atterrissage.

10. Système de positionnement automatique d'un drone selon une des revendications précédentes, dans lequel il est prévu, autour de la surface d'atterrissage, une voie circulaire (19) sur laquelle sont prévus au moins trois galets de roulement (20) qui peuvent être déplacés de façon mécanique le long de la voie circulaire et qui sont couplés à la boucle de câble (5), la boucle de câble (5) pouvant être étalée par déplacement des galets de roulement (20), de sorte que les bords de la boucle de câble étalée s'étendent le long de la limite extérieure de la surface d'atterrissage.

11. Système de positionnement automatique d'un drone selon une des revendications précédentes, dans lequel sont prévus deux treuils (6) qui sont disposés à distance l'un de l'autre sur la limite extérieure de la surface d'atterrissage et sont chacun pourvus d'une boucle de câble (5) associée, les moyens d'engagement du drone étant constitués d'au moins trois pieds, et les boucles de câbles, lorsqu'elles sont rétractées, entrant chacune en prise avec un pied précis du drone, afin de déplacer le drone dans la position prédéfinie.

12. Système de positionnement automatique d'un drone selon la revendication 1, comprenant en outre un poste de chargement/déchargement (7) d'une installation de transport,
le treuil (6) étant relié au poste de chargement/déchargement (7) pour pouvoir charger et/ou décharger le drone avec un envoi amené par l'installation de transport, et le treuil étant de manière facultative intégré au poste de chargement/déchargement (7), et/ou
le treuil (6) étant relié à une installation de ravitaillement en carburant, pour le ravitaillement du drone, et/ou à un poste de charge pour le chargement d'un accumulateur du drone.

13. Système de positionnement automatique d'un drone selon une des revendications précédentes, dans lequel le treuil (6) est doté d'un moyen de guidage (8) qui est agencé pour entrer en prise avec des dispositifs de guidage correspondants qui sont prévus sur ou dans le drone afin de pouvoir positionner et orienter le drone de manière encore plus précise lorsque le drone s'approche du treuil, et/ou les moyens d'engagement du drone (1) étant constitués d'au moins trois pieds (3, 4), où au moins un des pieds est réalisé de manière à pouvoir entrer en prise avec des éléments de guidage (28, 29, 30) et être guidé par ceux-ci, lesquels éléments sont prévus sur la surface d'atterrissage de l'emplacement d'atterrissage/de décollage afin de pouvoir positionner et orienter le drone (1) de manière précise lorsque la boucle de câble (5) continue d'être rétractée, quand ledit pied, au nombre d'au moins un, entre en prise avec la boucle de câble (5) lorsqu'une boucle de câble est rétractée par le treuil.

14. Système de positionnement automatique d'un drone (1) sur un emplacement d'atterrissage/décollage (2) comportant une surface d'atterrissage définie par une limite extérieure, le système comprenant en outre:
deux voies circulaires (21, 22) séparées, et
un drone (1),
le système étant agencé pour positionner et orienter dans une position prédéfinie sur la surface d'atterrissage, un drone (1) ayant atterri à un endroit quelconque de la surface d'atterrissage,
la surface d'atterrissage étant entourée par les deux voies circulaires (21, 22) séparées, qui se chevauchent partiellement, de manière à ce que la surface d'atterrissage soit entourée par au moins une des voies circulaires,
sachant qu'il est prévu sur chacune des deux voies circulaires (21, 22), respectivement un élément déplaçable (23) qui peut être déplacé le long de la voie circulaire (21, 22) respective, chacun des deux éléments (23) étant relié à une extrémité d'un câble (24) associé, l'autre extrémité de chaque câble (24) étant reliée à un treuil (6) associé,
les câbles (24) étant décalés par déplacement des éléments (23), en combinaison avec un actionnement des treuils (6), de manière à entrer en prise avec des dispositifs d'engagement prévus sur le drone, de sorte que le drone (1) est déplacé dans la position prédéfinie lors de la poursuite du décalage des câbles.

15. Système de transport de différents produits depuis un lieu de départ vers un lieu de destination situé à distance, en utilisant un drone (1), ledit système comprenant:
au moins une installation de transport stationnaire et au moins un système de positionnement automatique d'un drone sur un emplacement d'atterrissage/décollage (2) selon une des revendications précédentes, l'installation de transport, au nombre d'au moins une, étant reliée à au moins un poste de chargement/déchargement (7).
